(19) Europäisches Patentamt
European Patent Office
Office européen des brevets

(11) **EP 4 783 681 A1**

(12) **EUROPEAN PATENT APPLICATION**
published in accordance with Art. 153(4) EPC

(43) Date of publication:
29.07.2026 Bulletin 2026/31

(21) Application number: 24886414.2

(22) Date of filing: 10.10.2024

(51) International Patent Classification (IPC):
H04W 52/02 (2009.01)    H04B 7/06 (2006.01)
H04B 7/08 (2006.01)    H04L 5/00 (2006.01)
H04W 8/24 (2009.01)    H04W 56/00 (2009.01)

(52) Cooperative Patent Classification (CPC):
H04B 7/06; H04B 7/08; H04L 5/00; H04W 8/24;
H04W 52/02; H04W 56/00

(86) International application number:
PCT/KR2024/096250

(87) International publication number:
WO 2025/095744 (08.05.2025 Gazette 2025/19)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.10.2023 KR 20230147785

(71) Applicant: Samsung Electronics Co., Ltd.
Suwon-si, Gyeonggi-do 16677 (KR)

(72) Inventors:
• KIM, Youngbum
Suwon-si, Gyeonggi-do 16677 (KR)
• PARK, Kyoungmin
Suwon-si, Gyeonggi-do 16677 (KR)
• YI, Junyung
Suwon-si, Gyeonggi-do 16677 (KR)

(74) Representative: Gulde & Partner
Patent- und Rechtsanwaltskanzlei mbB
Berliner Freiheit 2
10785 Berlin (DE)

(54) **METHOD AND APPARATUS FOR CONTROLLING SYNCHRONIZATION SIGNAL IN WIRELESS COMMUNICATION SYSTEM APPLYING BASE STATION ENERGY SAVING**

(57) The present disclosure relates to a 5G or 6G communication system for supporting higher data transfer rates. Disclosed in the present disclosure are a method and an apparatus for providing an energy-saving mode of a base station. The base station may specify, for UE, a reference cell that serves as a QCL reference standard for PDCCH DMRSs, in addition to an SCell (SSB-less SCell) with simplified SSB transmission, and inform the UE of the specified reference cell through signaling. The reference cell may be a PCell or a second SCell among cells constituting a carrier aggregation, excluding the SSB-less SCell. The base station may specify an RS that the UE needs to refer to in the reference cell and inform the UE of the specified RS, thereby enabling the UE to determine QCL of the corresponding cell.

FIG. 14

EP 4 783 681 A1

**Description**

[Technical Field]

The disclosure relates to a communication method in a wireless communication system and, particularly, to a method and an apparatus for energy saving in a wireless communication system.

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

[Disclosure]

[Technical Problem]

Embodiments disclosed herein are to provide an apparatus and a method capable of effectively providing services in a mobile communication system. In particular, a method and an apparatus for efficiently performing base station energy saving operations are disclosed.

The technical subjects pursued in embodiments set forth herein may not be limited to the above-mentioned matters, and other technical subjects which are not mentioned herein may be considered by those skilled in the art from various embodiments of the disclosure to be described below.

[Technical Solution]

In order to solve the above problems, the disclosure provides a method performed by a terminal in a communication system, the method including an operation of receiving information on a reference cell from a base station, an operation of identifying that a first secondary cell (SCell) is an SSB-less SCell, and an operation of, based on the information on the reference cell, identifying a second reference signal (RS) that is in a quasi-co-location (QCL) relationship with a first RS of the first SCell, wherein the second RS is an RS of a cell indicated by the information on the reference cell.

In addition, the second reference signal may be a synchronization signal block (SSB).

In addition, the method may further include an operation of transmitting, to the base station, terminal capability information that supports an SSB-less SCell.

In addition, a maximum receive timing difference (MRTD) required for carrier aggregation (CA) including the SSB-less SCell may be greater than or equal to an MRTD required for intra-band CA and may be less than an MRTD required for inter-band CA.

In addition, a method performed by a base station in a communication system may include an operation of identifying that a first secondary cell (SCell) is an SSB-less SCell, and an operation of transmitting information on a reference cell to a terminal, wherein a first reference signal (RS) of the first SCell is in a quasi-co-location (QCL) relationship with a second RS, and the second RS is an RS of a cell indicated by the information on the reference cell.

In addition, a terminal in a communication system may include a transceiver, and a controller configured to: receive information on a reference cell from a base station; identify that a first secondary cell (SCell) is an SSB-less SCell; and based on the information on the reference cell, identify a second reference signal (RS) that is in a quasi-co-location (QCL) relationship with a first RS of the first SCell, wherein the second RS is an RS of a cell indicated by the information associated with the reference cell.

In addition, a base station in a communication system may include a transceiver and a controller configured to: identify that a first secondary cell (SCell) is an SSB-less SCell; and transmit information on a reference cell to a terminal, wherein a first reference signal (RS) of the first SCell is in a quasi-co-location (QCL) relationship with a second RS, and the second RS is an RS of a cell indicated by the information on the reference cell.

[Advantageous Effects]

Embodiments set forth herein provide an apparatus and a method which prevent excessive energy consumption and achieve high energy efficiency of a base station in a mobile communication system.

Advantageous effects obtainable from embodiments set forth herein may not be limited to the above-mentioned effects, and other effects which are not mentioned herein may be clearly derived and understood by those skilled in the art , based on the following description.

[Description of Drawings]

FIG. 1 illustrates an example of a basic structure of a time-frequency domain in a 5G communication system.
FIG. 2 illustrates an example of a time domain mapping structure and a beam sweeping operation in a 5G system.
FIG. 3 illustrates an example of a random access procedure in a 5G system.
FIG. 4 illustrates an example of a procedure in which a UE reports UE capability information to a base station in a 5G system.

FIG. 5 illustrates an example of base station beam allocation according to TCI state configuration.

FIG. 6 illustrates an example of a PDCCH beam allocation method.

FIG. 7 illustrates a TCI indication MAC CE signaling structure for a PDCCH DMRS.

FIG. 8 illustrates an example of CORESET and search space beam configurations.

FIG. 9 illustrates an example of configuring a 5G system by combining 3 component carriers for each of an uplink and a downlink.

FIG. 10 illustrates an example of a QCL determination method of a UE in a case where the UE does not receive a MAC CE activation command regarding a TCI state of an SCell from a base station, according to a first embodiment.

FIG. 11 illustrates an example of operation according to a second embodiment.

FIG. 12 illustrates an example of an EPRE configuration of a downlink signal in a 5G system.

FIG. 13 illustrates an example of a UE procedure according to an embodiment of the disclosure.

FIG. 14 illustrates an example of a base station procedure according to an embodiment of the disclosure.

FIG. 15 illustrates an example of a UE transceiving device in a wireless communication system according to an embodiment of the disclosure.

FIG. 16 illustrates an example of a structure of a UE according to an embodiment of the disclosure.

FIG. 17 illustrates an example of a structure of a base station according to an embodiment of the disclosure.


[Mode for Invention]

Hereinafter, embodiments of the disclosure will be described in detail with reference to the accompanying drawings. In describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description of the disclosure, a detailed description of known functions or configurations incorporated herein will be omitted when it is determined that the description may make the subject matter of the disclosure unnecessarily unclear. Hereinafter, various embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used herein, and other terms referring to subjects having equivalent technical meanings may be used.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, higher layer signaling (or higher signaling) refers to a signal delivery method from a base station to a terminal via a downlink data channel of a physical layer, or from a terminal to a base station via an uplink data channel of a physical layer. The higher layer signaling may also be referred to as radio resource control (RRC) signaling or a media access control (MAC) control element (CE).

In the following description, terms and names defined in the 3GPP new radio (3GPP NR) standards (or 5th generation mobile communication standards) are used for the sake of descriptive convenience. However, the disclosure is not limited by these terms and names, and embodiments of the disclosure may also be applied to other communication systems having similar technical backgrounds or channel types. Examples of such communication systems may include LTE or LTE-A mobile communication systems and mobile communication technologies developed beyond 5G. Therefore, based on determinations by those skilled in the art, the embodiments of the disclosure may be applied to other communication systems through some modifications without significantly departing from the scope of the disclosure.

In the following description, a base station is an entity that allocates resources to terminals, and may be at least one of a gNode B, a gNB, an eNode B, an eNB, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, examples of the base station and the terminal are not limited to those mentioned above.

In the following description of the disclosure, higher layer signaling may refer to signaling corresponding to at least one signaling among the following signaling, or a combination of one or more thereof.

- Master information block (MIB)
- System information block (SIB) or SIB X (X=1, 2, ...)
- Radio resource control (RRC)
- Medium access control (MAC) control element (CE)

In addition, L1 signaling may refer to signaling corresponding to at least one signaling method among signaling methods using the following physical layer channels or signaling, or a combination of one or more thereof.

- Physical downlink control channel (PDCCH)
- Downlink control information (DCI)
- UE-specific DCI
- Group common DCI
- Common DCI
- Scheduling DCI (for example, DCI used for the purpose of scheduling downlink or uplink data)
- Non-scheduling DCI (for example, DCI not used for the purpose of scheduling downlink or uplink data)
- Physical uplink control channel (PUCCH)
- Uplink control information (UCI)

As used herein, the term "slot" may generally refer to a specific time unit corresponding to a transmit time interval (TTI), may specifically refer to a slot used in a 5G NR system, or may refer to a slot or a subframe used in a 4G LTE system.

In order to process mobile data traffic which has recently increased exponentially, initial standards of new radio (NR) access technology or 5th generation (5G) systems which are next-generation communication systems after long term evolution (LTE) (or evolved universal terrestrial radio access (E-UTRA)) and LTE-advanced (LTE-A) (or E-UTRA evolution) have been completed. While legacy mobile communication systems have focused on conventional voice/data communication, 5G systems aim to satisfy various services and requirements, such as an enhanced mobile broadband (eMBB) service for improving legacy voice/data communication, an ultra-reliable and low latency communication (URLLC) service, and a massive machine type communication (MTC) service supporting massive machine-to-machine communication.

The system transmission bandwidth per single carrier of legacy LTE and LTE-A is limited to a maximum of 20MHz, but 5G systems aim to provide super-fast data services up to multiple Gbps by using super-broad bandwidths far wider than the same. Accordingly, 5G systems consider super-high-frequency bands ranging from multiple GHz to a maximum of 100 GHz, in which it is relatively easy to secure super-broad-bandwidth frequencies, as candidate frequencies. Additionally, it is possible to secure broad-bandwidth frequencies for 5G systems through frequency rearrangement or allocation among frequency bands ranging from hundreds of MHz to multiple GHz used in legacy mobile communication systems.

Radio waves in super-high frequency bands have millimeter-level wavelengths and thus are also referred to as millimeter waves (mmWave). However, the pathloss of radio waves in super-high frequency bands increases in proportion to the frequency band, thereby reducing the coverage of the mobile communication systems.

In order to overcome the shortcoming of coverage reduction in super-high frequency bands, a beamforming technology is applied such that the distance reached by radio waves is increased by concentrating the energy radiated by the radio waves at a specific target point by using multiple antennas. That is, signals to which the beamforming technology is applied have a smaller beam width, and radiated energy is concentrated within the smaller beam width, thereby increasing the distance reached by radio waves. The beamforming technology may be applied to each of the transmitting and receiving nodes. In addition to the increased coverage, the beamforming technology is also advantageous in that interference is reduced in regions in directions other than the beamforming direction. Appropriate operations of the beamforming technology require a method for accurately measuring transmitted/received beams and sending feedback. The beamforming technology may be applied to a control channel or a data channel having one-to-one correspondence between a UE and a base station. In addition, the beamforming technology may also be applied to a control channel and a data channel for transmitting a common signal transmitted from a base station to multiple UEs in the system, such as a synchronization signal, a physical broadcast channel (PBCH), and system information, in order to increase the coverage. When the beamforming technology is applied to a common signal, a beam sweeping technology is additionally applied such that the signal is transmitted after changing the beam direction, thereby ensuring that the common signal can reach a UE existing at a specific location inside the cell.

As another requirement of 5G systems, an ultra-low latency service is required such that the transmission delay between the transmission and reception ends is about 1ms or less. As an attempt to reduce the transmission delay, there is a need for frame structure design based on a shorter transmission time interval (TTI) than LTE and LTE-A. The TTI is the basic time unit for performing scheduling, and legacy LTE and LTE-A have a TTI of 1ms, which corresponds to the length of one subframe. For example, the short TTI, on which 5G systems are based in order to meet the requirement regarding the ultra-low latency service, may be 0.5ms, 0.25ms, 0.125ms, or the like, which is shorter than legacy LTE and LTE-A.

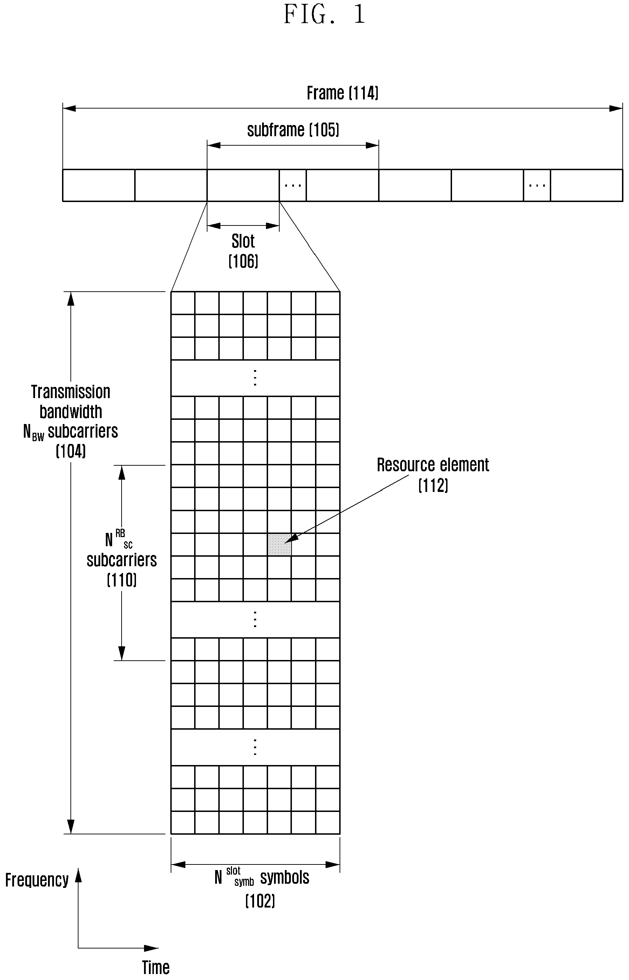

FIG. 1 illustrates an example of a basic structure of a time-frequency domain in a 5G system. That is, FIG. 1 illustrates the basic structure of a time-frequency resource domain which is a radio resource domain used to transmit data or control channels of a 5G system.

Referring to FIG. 1, the horizontal axis in FIG. 1 denotes the time domain, and the vertical axis denotes the frequency domain. The minimum transmission unit in the time domain of the 5G system is an orthogonal frequency division multiplexing (OFDM) symbol, a group of $N_{symb}^{slot}$ symbols 102 may constitute one slot 106, and a group of $N_{slot}^{subframe}$ slots may constitute one subframe 105. One subframe 105 may have a length of 1.0ms, and a group of ten subframes may constitute a 10ms frame 114. The minimum transmission unit in the frequency domain is a subcarrier, and a total of $N_{BW}$ subcarriers 104 may constitute the entire system transmission bandwidth.

The basic unit of resources in the time-frequency domain is a resource element (RE) 112, which may be represented by an OFDM symbol index and a subcarrier index. A resource block (RB) or a physical resource block (PRB) may be defined by consecutive $N_{sc}^{RB}$ subcarriers 110 in the frequency domain. In the 5G system, $N_{sc}^{RB} = 12$, and the data rate may increase in proportion to the number of RBs scheduled for a UE.

In the 5G system, the base station may map data in units of RBs, and may generally schedule RBs which constitute one slot with regard to a specific UE. That is, the basic time unit to perform scheduling in 5G systems may be a slot, and the basic frequency unit to perform scheduling may be an RB.

The number of OFDM symbols, $N_{symb}^{slot}$, is determined according to the length of a cyclic prefix (CP) which is added to each symbol in order to prevent inter-symbol interference. For example, if a normal CP is applied, $N_{symb}^{slot} = 14$ and, if an extended CP is applied, $N_{symb}^{slot} = 12$. The extended CP is applied to a system having a longer radio-wave transmission distance than the normal CP, thereby maintaining inter-symbol orthogonality. In the case of the normal CP, the ratio between the CP length and the symbol length is maintained at a constant value, so that the overhead due to the CP may remain constant regardless of the subcarrier spacing (SCS). That is, the symbol length may increase if the subcarrier spacing decreases, thereby increasing the CP length. To the contrary, the symbol length may decrease if the subcarrier spacing increases, thereby decreasing the CP length. The symbol length and the CP length may be inversely proportional to the subcarrier spacing.

In order to satisfy various services and requirements in 5G systems, various frame structures may be supported by adjusting the subcarrier spacing. For example,

- In terms of the operating frequency band, the larger the subcarrier spacing, the more advantageous for restoration of phase noise in high-frequency bands.
- In terms of the transmission time, the larger the subcarrier spacing, the smaller the symbol length in the time domain. The resulting smaller slot length makes it more advantageous to support an ultralow-latency service such as URLLC.
- In terms of the cell size, the larger the CP length, the larger cell can be supported, meaning that the smaller the subcarrier spacing, the larger cell can be supported. The term "cell" refers to a region covered by one base station in connection with mobile communication.

The subcarrier spacing, the CP length, and the like are pieces of information indispensable to OFDM transmission/reception, and efficient transmission/reception is possible only if the base station and the UE recognize the subcarrier spacing, the CP length, and the like as mutually common values. Table 1 enumerates the relationship between the subcarrier spacing configuration ($\mu$), the subcarrier spacing ($\Delta f$), and the CP length supported in 5G systems.

[Table 1]

| $\mu$ | $\Delta f = 2^{\mu} \cdot 15$ [$kHz$] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Table 2 enumerates the number ($N_{symb}^{slot}$) of symbols per one slot, the number ($N_{symb}^{slot}$) of slots per one frame, and the number ($N_{slot}^{subframe,\mu}$) of slots per one subframe with regard to each subcarrier spacing configuration ($\mu$) in the case of a normal CP.

[Table 2]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 3 enumerates the number ($N_{symb}^{slot}$) of symbols per one slot, the number ($N_{slot}^{frame,\mu}$) of slots per one frame, and the number ($N_{slot}^{subframe,\mu}$) of slots per one subframe with regard to each subcarrier spacing configuration ($\mu$) in the case of an extended CP.

[Table 3]

| $\mu$ | | $N_{symb}^{slot}$ | $N_{slot}^{frame,\mu}$ | $N_{slot}^{subframe,\mu}$ |
|---|---|---|---|---|
| 2 | | 12 | 40 | 4 |

It is expected that 5G systems, in the early state of introduction, will at least coexist with legacy LTE and/or LTE-A (hereinafter, referred to as LTE/LTE-A) systems or operate in a dual mode. Accordingly, legacy LTE/LTE-A may provide UEs with stable system operations, and the 5G systems may play the role of providing UEs with improved services. Therefore, the frame structure of 5G systems needs to include at least the frame structure of LTE/LTE-A or an essential parameter set (subcarrier spacing = 15kHz).

For example, a comparison between a frame structure having a subcarrier spacing configuration $\mu = 0$ (hereinafter, referred to as frame structure A) and a frame structure having a subcarrier spacing configuration $\mu = 1$ (hereinafter, referred to as frame structure B) shows that, compared with frame structure A, frame structure B has double the subcarrier spacing and the RB size, and has half the slot length and the symbol length. In the case of frame structure B, two slots may constitute one subframe, and 20 subframes may constitute one frame.

To generalize the framed structure of the 5G system, the subcarrier spacing, the CP length, the slot length, and the like (essential parameter set) are integer multiples with each other with regard to each frame structure, thereby providing a high degree of extendibility. In addition, a subframe having a fixed length of about 1ms may be defined to express a reference time unit unrelated to the frame structure.

The frame structures of the 5G system may be applied according to various scenarios. In terms of the cell size, the larger the CP length, the larger cell can be supported, meaning that frame structure A may support larger cells than frame structure B. In terms of the operating frequency band, the larger the subcarrier spacing, the more advantageous to high-frequency-band phase noise restoration, meaning that frame structure B may support a higher operating frequency than frame structure A. In terms of the service, the smaller the slot length (basic time unit of scheduling), the more advantageous for supporting an ultra-low latency service (for example, URLLC). Therefore, frame structure B may be more appropriate for the URLLC service than frame structure A.

As used in the following description of the disclosure, the uplink (UL) may refer to a radio link via which a user equipment transmits data or control signals to a base station, and the downlink (DL) may refer to a radio link via which the base station transmits data or control signals to the UE

In an initial access step in which a user equipment initially accesses a system, the user equipment may perform downlink time and frequency domain synchronization and acquire a cell identifier (ID) from a synchronization signal, transmitted by a base station, through a cell search. In addition, the UE may receive a physical broadcast channel (PBCH) by using the acquired cell ID and acquire an MIB as mandatory system information from the PBCH. Additionally, the UE may receive system information (SI) (or system information block (SIB)) transmitted by the base station to acquire cell-common transmission and reception-related control information. The cell-common transmission and reception-related control information may include random access-related control information, paging-related control information, common control information for various physical channels, etc.

A synchronization signal is a signal that serves as a reference for a cell search, and for each frequency band, a subcarrier spacing appropriate for a channel environment, such as phase noise, may be applied. For a data channel or a control channel, in order to support various services as described above, a subcarrier spacing may be applied differently depending on a service type.

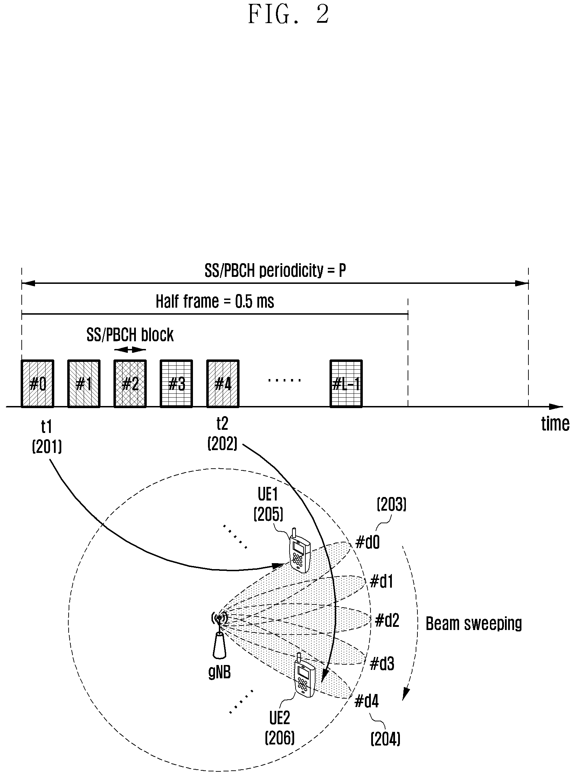

FIG. 2 illustrates an example of a time domain mapping structure and a beam sweeping operation in a 5G system.

For description purposes, the following elements may be defined.

- Primary synchronization signal (PSS): A PSS is a signal that serves as a reference for DL time/frequency synchronization, and provides a part of cell ID information.
- Secondary synchronization signal (SSS): An SSS serves as a reference for DL time/frequency synchronization, and provides the other part of the cell ID information. Additionally, the SSS may serve as a reference signal for PBCH demodulation of a PBCH.
- PBCH: provides an MIB which is mandatory system information necessary for the UE to transmit/receive data channels and control channels. The MIB may include search space-related control information indicating radio resource mapping information of a control channel, scheduling control information for a separate data channel for transmission of system information, a system frame number (SFN) which is a frame unit index that serves as a timing reference, and other information.
- Synchronization signal/PBCH block (SS/PBCH block) or SSB: An SS/PBCH block includes N OFDM symbols and is configured by a combination of a PSS, an SSS, a PBCH, etc. For a system to which a beam sweeping technology is applied, an SS/PBCH block is a minimum unit to which beam sweeping is applied. In the 5G system, N=4 may be satisfied. A base station may transmit up to a maximum of L SS/PBCH blocks, and the L SS/PBCH blocks are mapped within a half frame (0.5ms). In addition, the L SS/PBCH blocks are periodically repeated at predetermined periods P. The base station may inform a user equipment of period P via signaling. If there is no separate signaling of period P, the user equipment may apply a previously agreed default value. Each SS/PBCH block has an SS/PBCH block index ranging from 0 to maximum L-1, and the user equipment may know the SS/PBCH block index through SS/PBCH detection.

Referring to FIG. 2, FIG. 2 illustrates an example in which beam sweeping is applied in units of SS/PBCH blocks over time. In the example of FIG. 2, UE 1 205 receives an SS/PBCH block by means of a beam emitted in direction #d0 203 by beamforming applied to SS/PBCH block #0 at time point t1 201. In addition, UE 2 206 receives an SS/PBCH block by means of a beam emitted in direction #d4 204 by beamforming applied to SS/PBCH block #4 at time point t2 202. The UE may acquire, from the base station, an optimal synchronization signal via a beam emitted in the direction where the UE is located. For example, it may be difficult for UE 1 205 to acquire time/frequency synchronization and mandatory system information from the SS/PBCH block through the beam emitted in direction #d4 far away from the location of UE 1.

In addition to the initial access procedure, for the purpose of determining whether the radio link quality of a current cell is maintained at a certain level or higher, the UE may also receive the SS/PBCH block. Furthermore, during a handover procedure in which the UE moves access from the current cell to an adjacent cell, the UE may receive an SS/PBCH block of the adjacent cell in order to determine the radio link quality of the adjacent cell and acquire time/frequency synchronization with the adjacent cell.

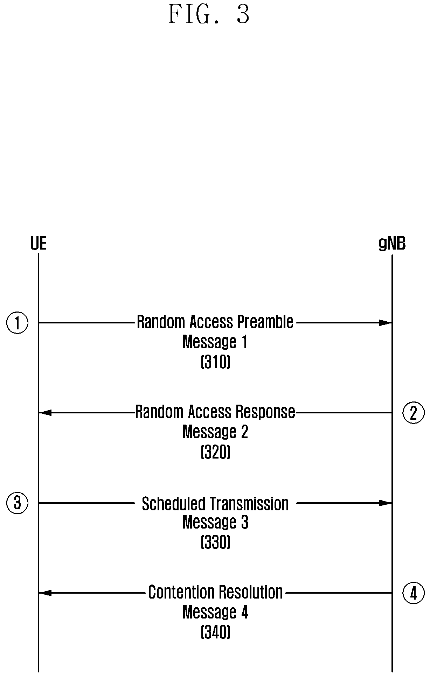

After acquiring an MIB and system information from the base station through the initial access procedure, the UE may perform a random access procedure in order to switch a link to the base station to a connected state (or RRC_CONNECTED state). Upon completing the random access procedure, the UE switches to a connected state in which one-to-one communication between the base station and the UE is possible. Hereinafter, a random access procedure will be described in detail with reference to FIG. 3.

FIG. 3 illustrates an example of a random access procedure in a 5G system. FIG. 3 illustrates only an example of an random access procedure, and the disclosure is not limited thereto. Furthermore, the disclosure is not limited to a 4-step random access procedure as illustrated in FIG. 3, and may be applied to a 2-step random access procedure (transmission/reception of message A (message including information corresponding to message 1 and message 3) and transmission/reception of message B (message including information corresponding to message 2 and message 4)).

Referring to FIG. 3, in the first step 310 of the random access procedure, the UE transmits a random access preamble to the base station (gNB). The random access preamble, which is a message initially transmitted by the UE in the random access procedure, may be referred to as message 1. The gNB may measure the transmission delay value between the UE and the gNB from the random access preamble, and may conduct uplink synchronization. The UE may arbitrarily select which random access preamble is to be used, from a random access preamble set given by system information in advance. In addition, the initial transmission power of the random access preamble may be determined according to the pathloss between the gNB and the UE, which is measured by the UE. Furthermore, the UE may determine the transmission beam direction of the random access preamble from a synchronization signal received from the gNB, thereby transmitting the random access preamble.

In the second step 320, the gNB transmits an uplink transmission timing adjustment command to the UE, based on the transmission delay value measured from the random access preamble received in the first step 310. Furthermore, the gNB may also transmit a power control command and an uplink resource to be used by the UE, as scheduling information. The scheduling information may include control information regarding the UE's uplink transmission beam.

If the UE fails to receive a random access response (RAR) (or message 2) which is scheduling information regarding message 3 from the gNB within a predetermined time in the second step 320, the UE may perform the first step 310 again. When performing the first step 310 again, the UE may transmit the random access preamble after increasing the transmission power thereof by a predetermined step (power ramping), thereby increasing the probability that the gNB will receive the random access preamble.

In the third step 330, the UE transmits uplink data (message 3) including the UE's ID to the gNB through a physical uplink shared channel (PUSCH) by using uplink resources assigned in the second step 320. The transmission timing of the PUSCH for transmitting message 3 may follow a timing control command received from the gNB in the second step 320. In addition, the transmission power of the PUSCH for transmitting message 3 may be determined in consideration of a power control command received from the gNB in the second step 320 and the power ramping value of the random access preamble. The PUSCH for transmitting message 3 may refer to an uplink data signal initially transmitted to the gNB by the UE after the UE has transmitted a random access preamble.

In the fourth step 340, upon determining that the UE has performed a random access without colliding with other UEs, the gNB may transmit data (message 4) including the ID of the UE which has transmitted uplink data in the third step 330 to the corresponding UE. Upon receiving a signal transmitted by the gNB in the fourth step 340, the UE may determine that the random access is successful. In addition, the UE may transmit HARQ-ACK information to the gNB through a physical uplink control channel (PUCCH) so as to indicate whether message 4 is successfully received or not.

If the gNB fails to receive a data signal from the UE due to collision between data transmitted by the UE in the third step 330 and data from another UE, the gNB may no longer transmit data to the UE. Accordingly, if the UE fails to receive data transmitted from the gNB in the fourth step 340 within a predetermined time, the UE may confirm a random access procedure failure and may restart from the first step 310.

Upon successfully completing the random access procedure, the UE is switched to a connected state, and one-to-one communication between the gNB and the UE becomes possible. The gNB may receive UE capability information reported by the UE in the connected state, and may adjust the scheduling with reference to the UE capability information from the UE. The UE may inform the gNB of whether the UE supports a specific function or not, the maximum allowed value of the function supported by the UE, and the like through the UE capability information. Therefore, UE capability information reported to the gNB by each UE may have a different value with regard to each UE.

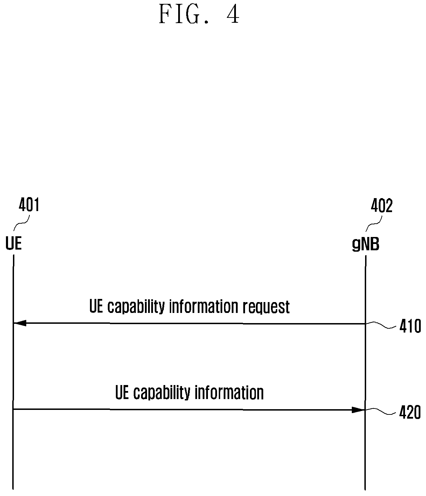

FIG. 4 illustrates an example of a procedure in which a UE reports UE capability information to a base station in a 5G system.

Referring to FIG. 4, in step 410, the base station (gNB) 402 may transmit a UE capability information request message to the UE 401. At the UE capability information request of the gNB, the UE transmits UE capability information to the gNB in step 420.

As an example of the UE capability information, the UE may report UE capability information including at least a part of the following control information to the gNB.

- Control information regarding the frequency band supported by the UE
- Control information regarding the channel bandwidth supported by the UE
- Control information regarding the maximum modulation scheme supported by the UE
- Control information regarding the maximum number of beams supported by the UE
- Control information regarding the maximum number of layers supported by the UE
- Control information regarding CSI reporting supported by the UE
- Control information regarding whether the UE supports frequency hopping
- Control information regarding the bandwidth when carrier aggregation (CA) is supported
- Control information regarding whether cross-carrier scheduling is supported when CA is supported

Next, downlink control information (DCI) in a 5G system will be described in detail.

In the 5G system, scheduling information regarding uplink data (or physical uplink shared channel (PUSCH)) or downlink data (or physical downlink shared channel (PDSCH)) may be transmitted from the gNB to the UE via DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

After passing through a channel coding and modulation process, the DCI may be transmitted via a physical downlink control channel (PDCCH). A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI is not explicitly transmitted, but is transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information may be scrambled by an SI-RNTI. DCI for scheduling a PDSCH regarding a RAR message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

With regard to a UE to be scheduled, the gNB may apply and operate a predetermined DCI format according to whether the scheduling information is related to downlink data (downlink assignment), whether the scheduling information is related to uplink data (uplink grant), and whether the DCI is for a purpose other than data scheduling, such as power control.

The gNB may transmit downlink data to the UE via a PDSCH which is a physical channel for downlink data transmission. Scheduling information such as detailed mapping locations in time and frequency domains of the PDSCH, the modulation scheme, HARQ-related control information, and power control information, may be provided from the gNB to the UE through DCI related to downlink data scheduling information among DCI transmitted through a PDCCH.

The gNB may transmit uplink data to the UE via a PDSCH which is a physical channel for uplink data transmission. Scheduling information such as detailed mapping locations in time and frequency domains of the PUSCH, the modulation scheme, HARQ-related control information, and power control information, may be provided from the gNB to the UE through DCI related to uplink data scheduling information among DCI transmitted through a PDCCH.

The time-frequency resource to which the PDCCH is mapped is referred to as a control resource set (CORESET). The CORESET may be configured in all or part of frequency resources in a bandwidth supported by the UE in the frequency domain. The CORESET may be configured with one or multiple OFDM symbols in the time domain, and this may be defined as a control resource set (CORESET) duration. The base station may configure one or multiple CORESETs for the UE through higher layer signaling (for example, system information, MIB, or RRC signaling). The description that a CORESET is configured for the UE may mean that information such as the CORESET identity, the CORESET's frequency location, and the CORESET's symbol length is provided thereto. Pieces of information provided to the UE by the gNB in order to configure a CORESET may include at least some of the pieces of information included in [Table 4].

[Table 4]

| ControlResourceSet ::= | SEQUENCE { |
|---|---|
| controlResourceSetId | ControlResourceSetId, |

```
                (CORESET identity)
    frequencyDomainResources        BIT STRING (SIZE (45)),
                (frequency domain resources)
        duration                            INTEGER (1..maxCoReSetDuration),
        (CORESET duration)
    cce-REG-MappingType             CHOICE {
        (CCE-to-REG mapping type)
        interleaved                     SEQUENCE {
            reg-BundleSize          ENUMERATED {n2, n3, n6},
                        (REG bundle size)
                interleaverSize         ENUMERATED {n2, n3, n6},
                (interleaver size)
                shiftIndex
INTEGER(0..maxNrofPhysicalResourceBlocks-1)        OPTIONAL -- Need S
                        (interleaver shift)
        },
        nonInterleaved                  NULL
    },
    precoderGranularity                 ENUMERATED  {sameAsREG-bundle,
allContiguousRBs},
        (precoding unit)
        tci-StatesPDCCH-ToAddList               SEQUENCE(SIZE  (1..maxNrofTCI-
StatesPDCCH)) OF TCI-StateId OPTIONAL, -- Cond NotSIB1-initialBWP
        (QCL configuration information)
    tci-StatesPDCCH-ToReleaseList           SEQUENCE(SIZE        (1..maxNrofTCI-
StatesPDCCH)) OF TCI-StateId OPTIONAL, -- Cond NotSIB1-initialBWP
        (QCL configuration information)
    tci-PresentInDCI                                    ENUMERATED   {enabled}
OPTIONAL, -- Need S
        (QCL indicator configuration information within DCI)
    pdcch-DMRS-ScramblingID                             INTEGER   (0..65535)
OPTIONAL, -- Need S
        (PDCCH DMRS scrambling identity)
```

```
}
```

A CORESET may be configured by $N_{RR}^{CORESET}$ RBs in the frequency domain and may be configured by $N_{symb}^{CORESET} \in \{1,2,3\}$ symbols in the time domain. A PDCCH may be configured by one or multiple control channel elements (CCEs). One CCE may be configured by six resource element groups (REGs), and each REG may be defined as one RB during one OFDM symbol. In one CORESET, REGs may be indexed in the time-first order starting from REG index 0, from the lowest RB of the first OFDM of the CORESET.

As a PDCCH-related transmission method, an interleaved type and a non-interleaved type may be supported. The base station may configure, for the UE, whether interleaved or non-interleaved transmission is performed with regard to each CORESET through higher layer signaling. Interleaving may be performed in units of REG bundles. The REG bundle may be defined as one REG or a set of multiple REGs. The UE may determine the CCE-to-REG type in the corresponding CORESET, based on the configuration by the base station regarding whether transmission is of the interleaved type or the non-interleaved type, in a manner as in Table 5 below.

[Table 5]

The CCE-to-REG mapping for a control-resource set can be interleaved or non-interleaved and is described by REG bundles:

- REG bundle *i* is defined as REGs {*iL,iL*+1,...,*iL+L*-1} where *L* is the REG bundle size, $i = 0,1, \dots, N_{REG}^{CORESET}/L - 1$, and $N_{REG}^{CORESET} = N_{RB}^{CORESET} N_{symb}^{CORESET}$ is the number of REGs in the CORESET

- CCE *j* consists of REG bundles {*f(6j/L),f(6j/L*+1),...*f(6j/L+6/L*-1)} where *f*(·) is an interleaver

For non-interleaved CCE-to-REG mapping, *L* = 6 and *f(x)* = *x*.

For interleaved CCE-to-REG mapping. $L \in \{2,6\}$ for $N_{symb}^{CORESET} = 1$ and $L \in \{N_{symb}^{CORESET}, 6\}$ for $N_{symb}^{CORESET} \in \{2,3\}$.

The interleaver is defined by

$$f(x) = (rC + c + n_{shift}) \bmod (N_{REG}^{CORESET}/L)$$
$$x = cR + r$$
$$r = 0,1, \dots, R - 1$$
$$c = 0,1. \dots, C - 1$$
$$C = N_{REG}^{CORESET}/(LR)$$

where $R \in \{2,3,6\}$.

The base station may provide the UE with configuration information regarding to which symbol the PDCCH is mapped in the slot, the transmission period, and the like through signaling.

A description of a search space for a PDCCH is as follows. The number of CCEs necessary to transmit a PDCCH may be 1, 2, 4, 8, or 16 according to aggregation levels (ALs), and different number of CCEs may be used to implement link adaption of a downlink control channel. For example, in the case of AL=L, one downlink control channel may be transmitted through L CCEs. The UE performs blind decoding for detecting a signal while being no information regarding the downlink control channel, and to this end, a search space indicating a set of CCEs may be defined. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

The search spaces may be classified into common search spaces (CSSs) and UE-specific search spaces (USSs). A group of UEs or all UEs may search a common search space of the PDCCH in order to receive cell-common control information such as dynamic scheduling regarding system information or a paging message. For example, the UE may receive PDSCH scheduling allocation information for reception of system information by searching the common search space for the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space for the PDCCH. The UE-specific search space may be defined UE-specifically as a function of various system parameters and the identity (ID) of the UE.

Configuration information of the search space for the PDCCH may be configured for the UE by the base station through higher layer signaling (e.g., SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, parameters of the search space for the PDCCH may include the following pieces of information given in Table 6 below.

[Table 6]

```
SearchSpace ::=                        SEQUENCE {

 searchSpaceId                          SearchSpaceId,
        (search space identity)
 controlResourceSetId      ControlResourceSetId      OPTIONAL, -- Cond SetupOnly
        (CORESET identity)
 monitoringSlotPeriodicityAndOffset CHOICE {
        (monitoring slot level periodicity and offset)
 sl1                                    NULL,
 sl2                                    INTEGER (0..1),
 sl4                                    INTEGER (0..3),
 sl5                                    INTEGER (0..4),
 sl8                                    INTEGER (0..7),
 sl10                                   INTEGER (0..9),
 sl16                                   INTEGER (0..15),
 sl20                                   INTEGER (0..19),
 sl40                                   INTEGER (0..39),
 sl80                                   INTEGER (0..79),
 sl160                                  INTEGER (0..159),
 sl320                                  INTEGER (0..319),
 sl640                                  INTEGER (0..639),
 sl1280                                 INTEGER (0..1279),
 sl2560                                 INTEGER (0..2559)
 }                 OPTIONAL,    -- Cond Setup
 duration        INTEGER (2..2559)      OPTIONAL,    -- Need R
        (monitoring duration)
 monitoringSymbols WithinSlot BIT STRING (SIZE (14))   OPTIONAL, -- Cond Setup
        (monitoring symbol location within slot)
 nrofCandidates                         SEQUENCE {
        (number of PDCCH candidates at each aggregation level)
 aggregationLevel1        ENUMERATED {n0, n1, n2, n3, n4, n5, n6, n8},
```

```
aggregationLevel2        ENUMERATED {n0, n1, n2, n3, n4, n5, n6, n8},
aggregationLevel4        ENUMERATED {n0, n1, n2, n3, n4, n5, n6, n8},
aggregationLevel8        ENUMERATED {n0, n1, n2, n3, n4, n5, n6, n8},
aggregationLevel16       ENUMERATED {n0, n1, n2, n3, n4, n5, n6, n8}
}
OPTIONAL,    -- Cond Setup
searchSpaceType                    CHOICE {
        (search space type)
common                                    SEQUENCE {
             (common search space)
dci-Format0-0-AndFormat1-0        SEQUENCE {
...
}                OPTIONAL,    -- Need R
dci-Format2-0        SEQUENCE {
nrofCandidates-SFI        SEQUENCE {
aggregationLevel1        ENUMERATED {n1, n2}        OPTIONAL,    -- Need R
aggregationLevel2        ENUMERATED {n1, n2}        OPTIONAL,    -- Need R
aggregationLevel4        ENUMERATED {n1, n2}        OPTIONAL,    -- Need R
aggregationLevel8        ENUMERATED {n1, n2}        OPTIONAL,    -- Need R
aggregationLevel16       ENUMERATED {n1, n2}        OPTIONAL     -- Need R
},
...
}                OPTIONAL,    -- Need R
dci-Format2-1                    SEQUENCE {
...
}
OPTIONAL,    -- Need R
dci-Format2-2                    SEQUENCE {
...
}                OPTIONAL,    -- Need R
dci-Format2-3                    SEQUENCE {
dummy1   ENUMERATED {sl1, sl2, sl4, sl5, sl8, sl10, sl16, sl20}   OPTIONAL,   --
Cond Setup
```

```
dummy2                ENUMERATED {n1, n2},

...

}                     OPTIONAL      -- Need R

},

ue-Specific                              SEQUENCE {

        (UE-specific search space)

dci-Formats      ENUMERATED {formats0-0-And-1-0, formats0-1-And-1-1},

...,



}

}                     OPTIONAL      -- Cond Setup2

}
```

According to configuration information, the base station may configure one or multiple search space sets for the UE. According to some embodiments, the base station may configure search space set 1 and search space set 2 for the UE. In search space set 1, the UE may be configured to monitor DCI format A scrambled by an X-RNTI in a common search space, and in search space set 3, the UE may be configured to monitor DCI format B scrambled by a Y-RNTI in a UE-specific search space.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

In a common search space, the UE may monitor combinations of DCI formats and RNTIs given below. Obviously, the example given below is not limiting.

-    DCI format 0_0/1_0 with CRC scrambled by C-RNTI, CS-RNTI, SP-CSI-RNTI, RA-RNTI, TC-RNTI, P-RNTI, SI-RNTI
-    DCI format 2_0 with CRC scrambled by SFI-RNTI
-    DCI format 2_1 with CRC scrambled by INT-RNTI
-    DCI format 2_2 with CRC scrambled by TPC-PUSCH-RNTI, TPC-PUCCH-RNTI
-    DCI format 2_3 with CRC scrambled by TPC-SRS-RNTI

In a UE-specific search space, the UE may monitor combinations of DCI formats and RNTIs given below. Obviously, the example given below is not limiting.

-    DCI format 0_0/1_0 with CRC scrambled by C-RNTI, CS-RNTI, TC-RNTI
-    DCI format 1_0/1_1 with CRC scrambled by C-RNTI, CS-RNTI, TC-RNTI

The RNTIs may follow the definition and usage given below.

Cell RNTI (C-RNTI): used to schedule a UE-specific PDSCH
Temporary cell RNTI (TC-RNTI): used to schedule a UE-specific PDSCH
Configured scheduling RNTI (CS-RNTI): used to schedule a semi-statically configured UE-specific PDSCH
Random access RNTI(RA-RNTI): used to schedule a PDSCH in a random access step
Paging RNTI (P-RNTI):used to schedule a PDSCH in which paging is transmitted
System information RNTI(SI-RNTI): used to schedule a PDSCH in which system information is transmitted
Interruption RNTI(INT-RNTI): used to indicate whether a PDSCH is punctured
Transmit power control for PUSCH RNTI (TPC-PUSCH-RNTI): used to indicate a power control command regarding a PUSCH
Transmit power control for PUCCH RNTI (TPC-PUCCH-RNTI): used to indicate a power control command regarding a PUCCH
Transmit power control for SRS RNTI (TPC-SRS-RNTI): used to indicate a power control command regarding an SRS

17

The DCI formats enumerated above may follow the definitions given in Table 7 below.

[Table 7]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In 5G, the search space at aggregation level L in connection with control resource set p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i$$

- L: aggregation level
- $n_{CI}$: carrier index
- $N_{CCE,p}$: total number of CCEs existing in control resource set $p$
- $n_{s,f}^{\mu}$ : slot index
- $M_{s,max}^{(L)}$ : number of PDCCH candidates at aggregation level L
- $m_{s,n_{CI}} = 0, ..., M_{s,max}^{(L)} -1$ : PDCCH candidate index at aggregation level L
- $i = 0, ..., L$ -1
- $Y_{p,n_{s,f}^{\mu}} = \left( A_p \cdot Y_{p,n_{s,f}^{\mu}-1} \right) mod D$ , $Y_{p,-1} = N_{RNTI} \neq 0, A_p = 39827$ for pmod3 = 0 , $A_p = 39829$ for pmod3 = 1 , $A_p$ = 39839 for pmod3 = 2, D = 65537
- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

Hereinafter, a method of measuring and reporting a channel state in a 5G communication system will be described in detail.

Channel state information (CSI) may include information as given below.

- Channel quality indicator (CQI): CQI index indication information including a modulation scheme and a coding rate which satisfy a predefined minimum reception error rate of a PDSCH
- Precoding matrix index (precoding matrix indicator (PMI)): Precoding matrix indication information selected by a UE
- Channel state information-reference signal (CSI-RS) resource indicator (CRI): CSI-RS information measured by a UE
- Rank indicator (RI): Rank indication information selected by a UE

- Layer indicator (LI): Indication information regarding the best layer in a precoding matrix reported by a UE
- SS/PBCH block resource indicator (SSBRI): SSB information measured by a UE
- L1-reference signal received power (L1-RSRP): LI RSRP information measured by a UE

A base station may control time and frequency resources for the aforementioned CSI measurement and report of a UE.

As the CSI measuring and reporting operation, "aperiodic", "semi-persistent", and "periodic" schemes may be supported, and which scheme is to be used may be configured for the UE by the base station via signaling. A semi-persistent CSI report method may support a "PUCCH-based semi-persistent (semi-PersistentOnPUCCH)" method and a "PUSCH-based semi-persistent (semi-PersistentOnPUSCH)" method. For the periodic or semi-persistent CSI report method, a PUCCH or PUSCH resource in which CSI is to be transmitted may be configured for the UE by the base station via higher-layer signaling. A periodicity and a slot offset of the PUCCH or PUSCH resource in which CSI is to be transmitted may be given by a subcarrier spacing configuration of an uplink (UL) bandwidth part configured for CSI report transmission. In the case of the aperiodic CSI report method, a PUSCH resource in which CSI is to be transmitted may be scheduled for the UE by the base station via L1 signaling (aforementioned DCI format 0_1).

Aperiodic CSI reporting of the UE may be performed using a PUSCH, periodic CSI reporting may be performed using a PUCCH, and semi-persistent CSI reporting may be performed using a PUSCH when triggered or activated via DCI and may be performed using a PUCCH after activated via an MAC CE.

The aperiodic CSI reporting may be triggered by a "CSI request" field in the above-described DCI format 0_1 which corresponds to scheduling DCI for a PUSCH.

In a wireless communication system, one or more different antenna ports (which may be replaced with one or more channels, signals, and combinations thereof, but in the following description of the disclosure, will be referred to as different antenna ports, as a whole, for the sake of convenience) may be associated with each other by a quasi-co-location (QCL) configuration as in Table 8 below. A TCI state is for announcing the QCL relationship between physical channel A (or a demodulation reference signal (DMRS) of the corresponding physical channel) and another RS or channel B, and the description that a reference antenna port A (reference RS #A) and another target antenna port B (target RS #B) are quasi-co-located (QCLed) with each other means that the UE is allowed to apply some or all of large-scale channel parameters estimated at the antenna port A to channel measurement from the antenna port B. The QCL may need to be associated with different parameters according to the situation such as 1) time tracking influenced by average delay and delay spread, 2) frequency tracking influenced by Doppler shift and Doppler spread, 3) radio resource management (RRM) influenced by average gain, or 4) beam management (BM) influenced by a spatial parameter. Accordingly, four types of QCL relationships are supported in the 5G system as in Table 8 below.

[Table 8]

| QCL type | Large-scale characteristics |
|---|---|
| A | Doppler shift, Doppler spread, average delay, delay spread |
| B | Doppler shift, Doppler spread |
| C | Doppler shift, average delay |
| D | Spatial Rx parameter |

The spatial RX parameter may refer to some or all of various parameters as a whole, such as angle of arrival (AoA), power angular spectrum (PAS) of AoA, angle of departure (AoD), PAS of AoD, transmit/receive channel correlation, transmit/receive beamforming, and spatial channel correlation.

The QCL relationships may be configured for the UE through RRC parameter TCI-state and QCL-info as in Table 9 below. Referring to Table 9, the base station may configure one or more TCI states for the UE, thereby informing of a maximum of two kinds of QCL relationships (qcl-Type1, qcl-Type2) regarding the RS that refers to the ID of the TCI state, that is, the target RS. Each piece of QCL information (QCL-Info) included in each TCI state includes the serving cell index and the BWP index of the reference RS indicated by the corresponding QCL information, the type and ID of the reference RS, and a QCL type as in Table 8 above.

【Table 9】

```
TCI-State ::=                    SEQUENCE {

    tci-StateId                     TCI-StateId,

    (ID of corresponding TCI state)

    qcl-Type1                       QCL-Info,

    (QCL information of first refernece RS of RS (target RS) referring to corresponding

TCI state ID)

    qcl-Type2                       QCL-Info            OPTIONAL,

    -- Need R

    (QCL information of second refernece RS of RS (target RS) referring to

corresponding TCI state ID)

    ...

    }


    QCL-Info ::=                     SEQUENCE {

        cell                        ServCellIndex           OPTIONAL,     --

Need R

        (serving cell index of reference RS indicated by corresponding QCL information)

        bwp-Id                      BWP-Id                  OPTIONAL, -

- Cond CSI-RS-Indicated

        (BWP index of reference RS indicated by corresponding QCL information)

        referenceSignal             CHOICE {

            csi-rs                      NZP-CSI-RS-ResourceId,

            ssb                         SSB-Index

            (one of CSI-RS ID or SSB ID indicated by corresponding QCL information)

        },

        qcl-Type                    ENUMERATED {typeA, typeB, typeC,

typeD},
```

```
    ...

    }
```

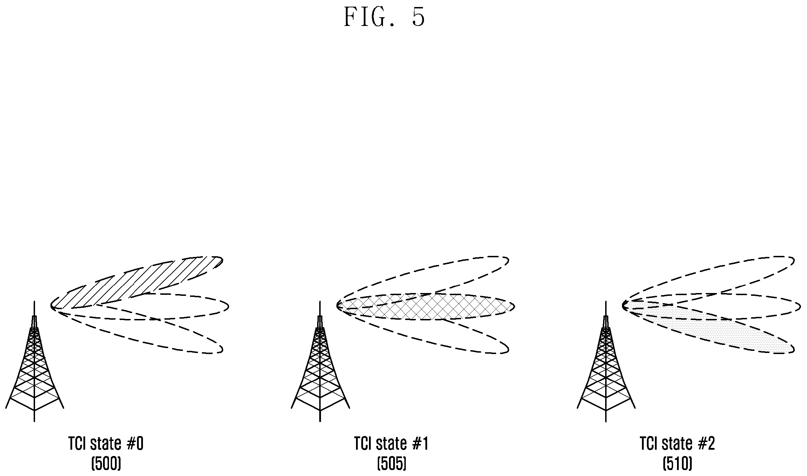

FIG. 5 illustrates an example of base station beam allocation according to TCI state configurations.

Referring to FIG. 5, the base station may transfer information regarding N different beams to the UE through N different TCI states. For example, in the case of N=3 as in FIG. 5, the base station may configure qcl-Type2 parameters included in three TCI states 500, 505, and 510 as QCL type D while being associated with CSI-RSs or SSBs corresponding to different beams, thereby notifying that antenna ports referring to the different TCI states 500, 505, and 510 are associated with different spatial Rx parameters, that is, different beams.

In the case of a PDCCH demodulation reference signal (DMRS), specific valid TCI state configurations applicable to a PDCCH DMRS antenna port are as given in Table 10 below. In Table 10, "Valid TCI state Configuration = 4" is a combination assumed by the UE before an RRC configuration, and cannot be configured after the RRC configuration.

[Table 10]

| Valid TCI state configuration | DL RS 1 | qcl-Type1 | DL RS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | | |
| 4 | SS/PBCH Block | QCL-TypeA | SS/PBCH Block | QCL-TypeD |

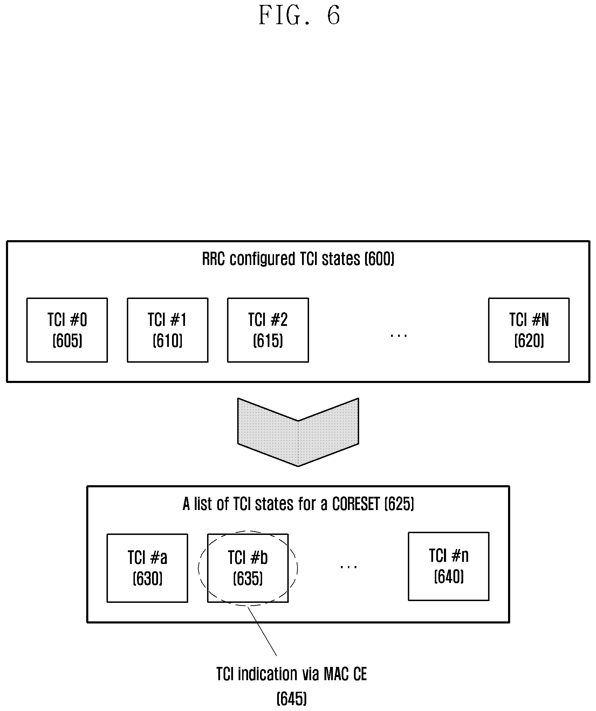

In the 5G system, a hierarchical signaling method as illustrated in FIG. 6 is supported for dynamic allocation regarding a PDCCH beam. FIG. 6 illustrates an example of a PDCCH beam allocation method.

Referring to FIG. 6, the base station may configure N TCI states 605, 610, ..., 620 for the UE through RRC signaling 600, and may configure some thereof as TCI states for a CORESET (625). Thereafter, the base station may indicate, through MAC CE signaling, one of the TCI states 630, 635, and 640 for the CORESET to the UE (645). The UE may then receive a PDCCH, based on beam information included in the TCI state indicated by the MAC CE signaling.

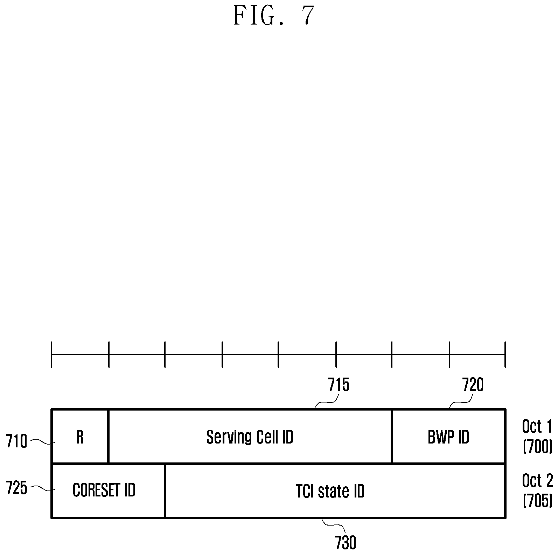

FIG. 7 illustrates a TCI indication MAC CE signaling structure for a PDCCH DMRS.

Referring to FIG. 7, the TCI indication MAC CE signaling for the PDCCH DMRS is configured by 2 bytes (16bits), and includes a 1-bit reserved bit 710, a 5-bit serving cell ID 715, a 2-bit BWP ID 720, a 2-bit CORESET ID 725, and a 6-bit TCI state ID 730.

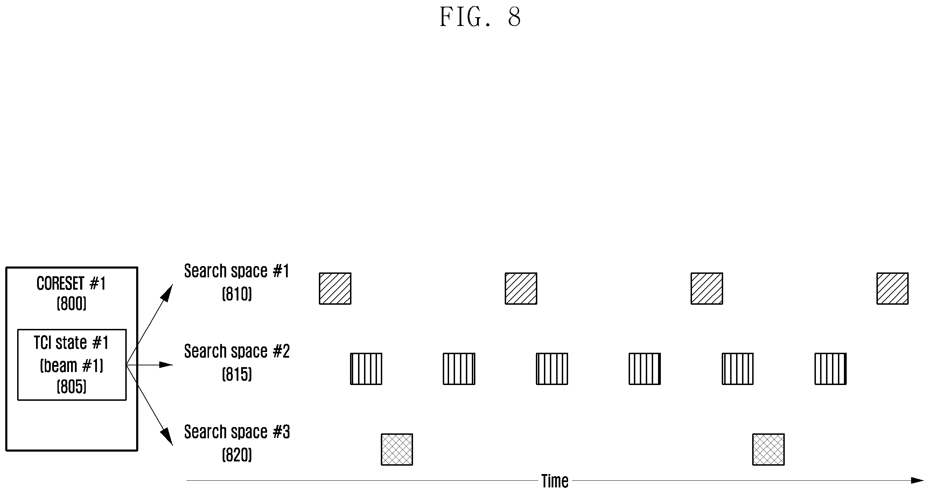

FIG. 8 illustrates an example of CORESET and search space beam configurations.

Referring to FIG. 8, the base station may indicate one of TCI state lists included in a CORESET 800 configuration through MAC CE signaling (805). Until a different TCI state is subsequently indicated for the corresponding CORESET through different MAC CE signaling, the UE may consider that the same QCL information (beam #1) 805 is applied to all of one or more search spaces 810, 815, and 820 connected to the CORESET.

The above-described PDCCH beam allocation method has a problem in that it is difficult to indicate a beam change faster than MAC CE signaling delay, and the same beam is unilaterally applied to each CORESET regardless of search space characteristics, thus making flexible PDCCH beam operation difficult. In the following embodiments of the disclosure, "PDCCH QCL determination method 1", "PDCCH QCL determination method 2", and "PDCCH QCL determination method 3" as described below are provided as more flexible PDCCH beam configuration and operation methods. Although multiple distinctive examples will be provided for convenience of description of embodiments of the disclosure, they are not mutually exclusive, and can be combined and applied appropriately for each situation.

## PDCCH QCL determination method 1

The base station may configure one or multiple TCI states for the UE with regard to a specific control resource set, and may activate one of the configured TCI states through a MAC CE activation command. For example, if {TCI state#0, TCI state#1, TCI state#2} are configured as TCI states for control resource set #1, the base station may transmit an activation command to the UE through a MAC CE such that TCI state#0 is assumed as the TCI state regarding control resource set #1. That is, based on the activation command regarding the TCI state received through the MAC CE, the UE may correctly receive the DMRS of the corresponding CORESET, based on QCL information in the activated TCI state.

## PDCCH QCL determination method 2

With regard to a control resource set configured with an index of 0 (control resource set #0), if the UE has failed to receive an MAC CE activation command regarding the TCI state of control resource set #0, the UE may assume that the DMRS transmitted in CORESET #0 has been QCL-ed with a SS/PBCH block identified in the initial access process, or in a non-contention-based random access process not triggered by a PDCCH order.

## PDCCH QCL determination method 3

With regard to a control resource set configured with an index value other than 0 (CORESET #X), if the UE has no TCI state configured regarding CORESET #X, or if the UE has been configured with one or more TCI states but has failed to receive an MAC CE activation command for activating one of them, the UE may assume that the DMRS transmitted in CORESET #X has been QCL-ed with an SS/PBCH block identified in the initial access process.

Hereinafter, a base station energy saving method will be described. As a way to support ultra-high-speed data services, a spatial multiplexing method using multiple transmission/reception antennas may increase data rates. In general, the number of necessary power amplifiers (PAs) increases in proportion to the number of transmission/reception antennas provided in a base station or a UE. The maximum outputs of the base station and the UE depend on PA characteristics, and the maximum output of the base station generally varies depending on the size of the cell covered by the base station. The maximum output is commonly indicated using a dBm unit. The maximum output of the UE is commonly 23dBm or 26dBm.

As an example of a commercial 5G base station, the base station may be equipped with 64 transmission antennas and 64 corresponding PAs in a 3.5GHz frequency band and may operate with a bandwidth of 100MHz. Consequently, the power consumption of the base station increases in proportion to the output and the operating time of the power amplifiers. Compared with LTE base stations, 5G base stations are characterized in that they use larger bandwidths and have more transmission antennas because of higher operating frequency bands thereof. This characteristic is effective in increasing a data rate, but comes at the cost of increased base station energy consumption. Therefore, energy consumed by the entire mobile communication network increases in proportion to the number of base stations constituting the mobile communication network.

As described above, energy consumption of the base station highly depends on power amplifier operations. Since power amplifiers are involved in base station transmission operations, downlink transmission of the base station is highly related to energy consumption of the base station. Relatively, uplink reception operations of the base station does not account for a large portion of the energy consumption of the base station. Physical channels and physical signals transmitted by the base station in the downlink are as follows.

- PDSCH: A downlink data channel including data to be transmitted to one or multiple UEs
- PDCCH: A downlink control channel including scheduling information regarding a PDSCH and a PUSCH. Alternatively, the base station may transmit control information, such as a slot format and a power control command, through the PDCCH alone without a PDSCH or PUSCH to be scheduled. Scheduling information includes information regarding resources to which the PDSCH or PUSCH is mapped, HARQ-related information, power control information, and the like.
- PBCH: A downlink broadcast channel for providing an MIB as mandatory system information necessary for the UE to transmit/receive data channels and control channels
- PSS: A signal which is a reference for DL time/frequency synchronization and provides partial information on a cell ID
- SSS: A signal which serves as a reference for DL time/frequency synchronization and provides the remaining partial information on the cell ID
- DM-RS: A reference signal for channel estimation of the UE with regard to each of the PDSCH, PDCCH, and PBCH
- CSI-RS: A downlink signal that serves as a reference for downlink channel state measurement of the UE
- Phase-tracking reference signal (PT-RS): A downlink signal for phase tracking

In terms of base station energy saving, if a base station stops a downlink transmission operation, a power amplifier operation is stopped accordingly, which increases the effect of base station energy saving. Not only the operation of the power amplifiers but also the operation of the other base station devices, such as a baseband device, are reduced, which enables additional energy saving. Likewise, additional energy saving can be achieved if it is possible to stop the uplink reception operation even though the uplink reception operation occupies a relatively small proportion in the entire energy consumption of the base station.

The downlink transmission operation of the base station basically depends on the amount of downlink traffic. For example, if there is no data to be transmitted to the UE in the downlink, the base station does not need to transmit a PDSCH and a PDCCH for scheduling the PDSCH. Alternatively, if transmission can be suspended for a moment for a reason, such as data not being sensitive to a transmission delay, the base station may not transmit a PDSCH and/or a PDCCH. Hereinafter, a method for reducing base station energy consumption by transmitting no PDSCH and/or PDCCH related to data traffic or by appropriately adjusting the transmission as described above will be referred to as "base station energy saving method 1-1" for the sake of descriptive convenience.

To the contrary, physical channels and physical signals such as PSS, SSS, PBCH, and CSI-RS are characterized in that they are repetitively transmitted at prearranged periods, regardless of data transmission for the UE. Therefore, the UE may continuously update the downlink time/frequency synchronization, the downlink channel state, the radio link quality, and the like although no data is received. That is, the PSS, SSS, PBCH, and CSI-RS need to be transmitted through the downlink regardless of the downlink data traffic, and this causes energy consumption of the base station. Therefore, base station energy savings may be achieved by controlling transmission of the PSS, SSS, PBCH, and CSI-RS signals, which are unrelated (or have low relevance) to data traffic, to occur less frequently (hereinafter referred to as "base station energy saving method 1-2").

Through the "base station energy saving method 1-1" or "base station energy saving method 1-2", base station energy saving may be maximized by stopping or minimizing the operation of power amplifiers and the operation of RF devices, baseband devices, and the like related thereto during a time interval in which the base station performs no downlink transmission.

As another method, energy consumption of the base station may be reduced by switching off some of the antennas or power amplifiers of the base station (hereinafter referred to as "base station energy saving method 2"). In this case, the effect of base station energy saving may involve countereffects such as reduced cell coverage or reduced throughput. For example, there may be a base station which is equipped with 64 transmission antennas and corresponding 64 power amplifiers and operates with a bandwidth of 100MHz in the 3.5GHz frequency band as described above, If the base station activates only 4 transmission antennas and 4 power amplifiers and switches off the others for a predetermined time interval in order to save base station energy, base station energy consumption during the time interval will be reduced to approximately 1/16 (=4/64), However, when only the 4 transmission antennas and 4 power amplifiers are activated in the time interval and the others are switched off, due to the decrease in maximum transmission power and beamforming gain, it is difficult to achieve the existing cell coverage and throughput obtained when the 64 antennas and power amplifiers are assumed.

In the following description, in order to distinguish from normal base station operations, a base station mode in which operations for base station energy saving are applied will be referred to as a base station energy saving (ES) mode, and a base station mode in which normal base station operations are applied will be referred to as a base station normal mode.

As another scheme for supporting ultrahigh speed data services, signal transmission/reception in ultrawide bandwidths (tens of MHz to hundreds of MHz, or several GHz) may be supported in the 5G system. Signal transmission/reception in ultrawide bandwidths may be supported through a single component carrier (CC) or through a carrier aggregation (CA) technology using a combination of multiple CCs. When a mobile communication operator fails to secure, through a single component carrier, a frequency with a sufficient bandwidth for providing ultrahigh speed data services, the CA technology may increase the total frequency bandwidth by combining each component carrier with a relatively small bandwidth size, as a result of which ultrahigh speed data services are possible.

In general, the lower the frequency band, the larger the coverage because of the lower degree of pathloss, and the larger the frequency band, the smaller the coverage because of the higher degree of pathloss. In a low-frequency band, fewer frequencies are available for mobile communication, and the bandwidth is smaller. On the other hand, in a high-frequency band, it is easier to secure a broad-bandwidth frequency, and the same is thus appropriate for a super-fast data service. Evolution of mobile communication systems evolve has been followed by efforts to discover and utilize new frequency bands. For example, in the next-generation (6th generation(6G)) mobile communication systems, the terahertz (THz) (1012 Hz) band is considered as one of candidate frequencies, although still in the early phase of discussion.

In general, a mobile communication operator secures multiple frequency bands and provide users with mobile communication services. For example, a mobile communication operator may combine already-secured LTE system frequency band and a newly-secured 5G system frequency band, thereby operating a system in which LTE and 5G are combined. As another example, a mobile communication operator may secure multiple 5G system frequency bands and then combine the multiple frequency bands, thereby providing a mobile communication service through 5G CA. As described above, characteristics such as the coverage and bandwidth vary according to the frequency band, and mobile communication services based on a combination of multiple frequency bands are gaining dominance over mobile communication services based on a single frequency band.

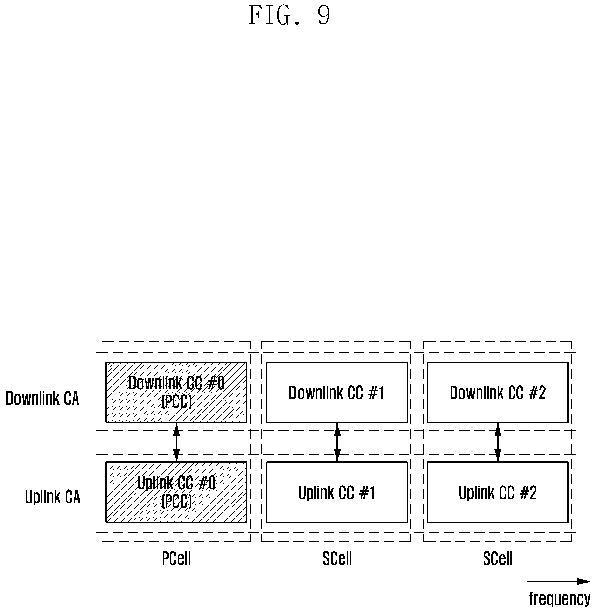

FIG. 9 is a diagram illustrating an example of configuring a 5G system by combining 3 component carriers for each of an uplink and a downlink.

According to FIG. 9, in a carrier aggregation system, component carriers are classified as a PCell or an SCell for operation. The primary cell (PCell) or first cell is a cell that provides a UE with basic radio resources and is used as a reference cell for performing an operation, such as an initial access of the UE, a handover, or the like. The PCell is configured with a downlink primary frequency (or primary component carrier (PCC)) and an uplink primary frequency. The UE may transmit uplink control information (UCI) including a HARQ ACK/NACK for feedback regarding whether data received from a base station has an error, CSI indicating a channel state between the base station and the UE, or the like, through a PUCCH which is an uplink control channel, and the PUCCH may be transmitted through a PCell. The secondary cell (SCell) or second cell is a cell that provides additional radio resources to the UE together with the PCell, and may be configured with a downlink secondary frequency (or secondary component carrier (SCC)) and an uplink secondary frequency, or may be configured with a downlink secondary frequency.

The configuration of each component carrier is independent from each other, and the downlink carrier aggregation and the uplink carrier aggregation may be applied independently from each other. For example, carrier aggregation including one component carrier with 100MHz bandwidth and two component carriers with 50MHz bandwidth may be applied to a downlink, and only one component carrier with 100MHz bandwidth may be used (i.e., no carrier aggregation may be applied) to an uplink. In the disclosure, unless otherwise specified, a cell and a component carrier will be used interchangeably without distinction. The base station may inform the UE of a configuration regarding carrier aggregation, such as which component carriers to be combined, the number of component carriers to be combined, and control information related to a bandwidth of each component carrier, via signaling.

As described above, in a system in which a carrier aggregation (CA) technology that combines multiple component carriers is applied, transmission of an SSB in a predetermined component carrier may be reduced to decrease energy consumption of a base station. That is, the base station may obtain an effect of reducing base station energy used for SSB transmission by omitting SSB transmission or making SSB transmission infrequent. However, in this case, a method of replacing or complementing functions, such as time-frequency synchronization, QCL or beam management (BM), an uplink transmission power reference signal, or the like which has been provided by the base station for a UE through SSB transmission, is required.

Hereinafter, a method of decreasing base station energy consumption through reduction of SSB transmission according to the disclosure will be described through detailed embodiments. In the following description of the disclosure, various examples will be described through multiple embodiments, but the same are not independent embodiments, and one or more embodiments may be applied concurrently or in combination.

<First Embodiment>

The first embodiment describes a method in which a UE determines QCL for a cell in which a base station reduces SSB transmission in order to decrease base station energy consumption.

Specifically, the first embodiment relates to a method in which the UE determines QCL of a PDCCH in a case where SSB transmission of an SCell is reduced in order to decrease base station energy consumption in a system applying carrier aggregation. In order to reduce SSB transmission for the purpose of decreasing base station energy consumed for SSB transmission, the base station may omit SSB transmission of the SCell or infrequently perform the SSB transmission. For the sake of convenience in the following description, the SCell as described above may be referred to as an "SSB-less SCell."

According to the PDCCH (or PDCCH DMRS) QCL determination method described above (the "PDCCH QCL determination method 2" or the "PDCCH QCL determination method 3"), when the UE does not receive, from the base station, a MAC CE activation command for the SCell's TCI state, the UE determines that a PDCCH DMRS of the SCell is QCLed with an SSB identified during the UE's initial access process or non-contention-based random access process which is not triggered by a PDCCH order. However, in the first embodiment, due to the reduction of SSB transmission, there may be no SSB serving as a reference for QCL regarding the PDCCH DMRS of the "SSB-less SCell," or even if there is one, its accuracy may not be guaranteed.

In order to solve the above-mentioned problem, the base station may designate a "reference cell" that is a reference for QCL regarding the PDCCH DMRS, in addition to the SSB-less SCell in which SSB transmission is reduced, and notify the UE of the same via signaling. In addition, the base station may notify the UE of a reference signal (RS) that the UE needs to refer to in the "reference cell." The RS may be an SSB or a CSI-RS. The "reference cell" may be a PCell or a second SCell, excluding the "SSB-less SCell" among cells in carrier aggregation. For example, the signaling may be higher layer signaling, and an SSB index or a CSI-RS resource index may be indicated to indicate the RS.

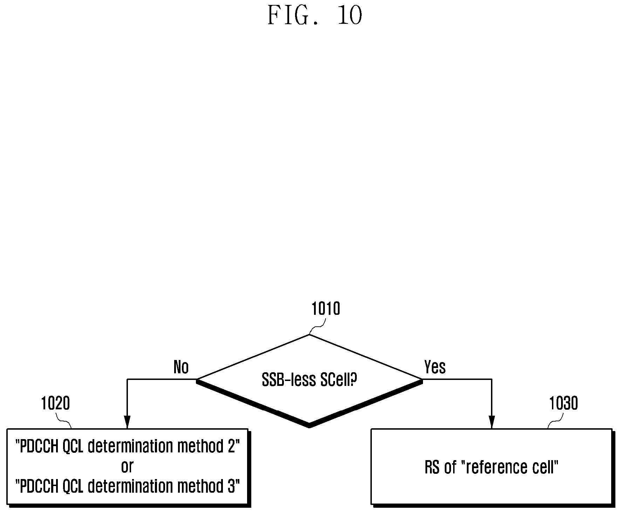

FIG. 10 is a diagram illustrating an example of a QCL determination method of a UE in a case where the UE does not receive an MAC CE activation command for a TCI state of an SCell from a base station, according to a first embodiment. Although not illustrated, when the UE receives the MAC CE activation command for the TCI state of the SCell from the base station, the UE may determine the QCL of the PDCCH DMRS according to "PDCCH QCL determination method 1" described above.

In operation 1010, the UE determines whether a PDCCH to be received is transmitted in the "SSB-less SCell.". When the PDCCH is transmitted in the "SSB-less SCell," the UE determines that an RS of a "reference cell" notified to the UE by the base station via signaling is QCLed with a corresponding PDCCH DMRS in operation 1030. The RS of the "reference cell" may be an SSB or a CSI-RS, and may be notified to the UE by the base station via signaling. The UE may receive the PDCCH, based on the determined QCL relationship.

When the SCell in which the PDCCH to be received by the UE is transmitted is not an "SSB-less SCell," the UE determines that the PDCCH DMRS of the corresponding SCell is QCLed with an SSB identified in an initial access process of the UE or a non-contention-based random-access process not triggered by a PDCCH order, in operation 1020. This is the same as "PDCCH QCL determination method 2" or "PDCCH QCL determination method 3" above. The UE may receive the PDCCH, based on the determined QCL relationship.

The above-described flowchart illustrates an exemplary method that may be implemented according to the principles of the disclosure, and various changes may be made to the method illustrated in the flowchart in the specification. For example, although illustrated as a series of operations, the various operations of each drawing may overlap, operate in parallel, operate in a different order, or operate multiple times. In another example, operations may be omitted or replaced with other operations.

In the case of a PDSCH transmitted by the base station to the UE in the SCell, the UE may correctly receive the PDSCH, based on QCL information in a TCI state for the PDSCH, which is activated by a MAC CE activation command for PDSCH QCL. When the UE does not receive the MAC CE activation command for PDSCH QCL or the MAC CE activation command is invalid, the UE may determine that the QCL of the PDSCH is the same as the QCL of the PDCCH. Therefore, by combining the PDCCH QCL determination method of the UE in operation 1030, the UE may determine that the PDSCH DMRS is QCLed with the PDCCH DMRS, and the PDCCH DMRS is QCLed with the RS of the "reference cell." Consequently, the UE may determine that the PDSCH DMRS is QCLed with the RS of the "reference cell." In this case, the UE may receive the PDSCH, based on the determined QCL relationship.

<Second Embodiment>

The second embodiment describes a method of signaling reduction of SSB transmission to a UE when a base station reduces SSB transmission in a predetermined cell in order to decrease base station energy consumption.

Specifically, the second embodiment describes a method in which the base station informs the UE that SSB transmission of an SCell ("SSB-less SCell") is reduced when the base station reduces the SSB transmission of the SCell in order to decrease base station energy consumption in a system in which carrier aggregation is applied.

SSB configuration information related to an SSB transmitted in the predetermined cell may include the following. The base station may inform the UE of the SSB configuration information via higher signaling.

- absoluteFrequencySSB: information indicating a mapping position of an SSB in the frequency domain
- ssb-PositionsInBurst: information indicating a mapping position of an SSB in the time domain. For example, whether an actual SSB is mapped or not mapped to a pre-agreed mapping position of an SSB in the time domain may be expressed in a bitmap scheme. For example, by associating an 8-bit bitmap including b1 to b8 with pre-agreed 8 time-domain positions of SSBs (b1: SSB1, b2: SSB2,..., b8: SSB8), it may indicate that an SSB is actually transmitted in a corresponding time-domain position when a corresponding bit is "1," and an SSB is not actually transmitted in a corresponding time-domain position when a corresponding bit is "0."
- ssb-periodicityServingCell: information indicating a transmission period of an SSB. It may be expressed using ms, and may be configured to a value, such as 5ms, 10ms, 20ms, 40ms, 80ms, and 160ms.
- ss-PBCH-BlockPower: information indicating an energy per resource element (EPRE) which indicates transmission power of a secondary synchronization signal (SSS) of an SSB. It may be expressed using dBm. For example, it may be configured a value in a range of -60 dBm to 50 dBm. For a PSS EPRE, a PBCH EPRE, and a PBCH DMRS EPRE, the same value as the SSS EPRE is generally applied.

When the base station omits SSB transmission for an SSB-less SCell operation, the base station may notify the UE that SSB transmission is omitted by not signaling at least one of the SSB configuration information to the UE. Therefore, when the UE does not receive the SSB configuration information (or at least one piece of information included in the SSB configuration information) from the base station via signaling, the UE may recognize that SSB transmission is omitted. Alternatively, the base station may configure a special state indicating that SSB transmission is omitted as the SSB configuration information and notify the UE of the same. For example, by configuring all bits in the bitmap indicating ssb-PositionsInBurst to "0," omission of SSB transmission may be indicated. Alternatively, a special state indicating that SSB transmission is omitted may be added to ssb-periodicityServingCell or ss-PBCH-BlockPower. In other words, as an example, the base station may configure at least one piece of information included in the SSB configuration information to a predetermined value in a case where SSB transmission is omitted. Upon reception of the SSB configuration information, the UE may identify that SSB transmission is omitted.

When the base station transmits an SSB less frequently for an "SSB-less SCell operation", the base station may add a state indicating a corresponding value to the SSB configuration information. For example, as a state added to ssb-periodicityServingCell, a value, such as 320ms or 540ms, which is larger than the existing value may be added.

Alternatively/Additionally, the base station may separately define additional signaling, in addition to the above-described SSB configuration information, as a method of notifying the UE of an "SSB-less SCell" operation. Therefore, when the UE receives the signaling from the base station, the UE may recognize that SSB transmission is omitted in a cell corresponding to the signaling or that the corresponding cell operates as an "SSB-less SCell" with a low SSB transmission frequency.

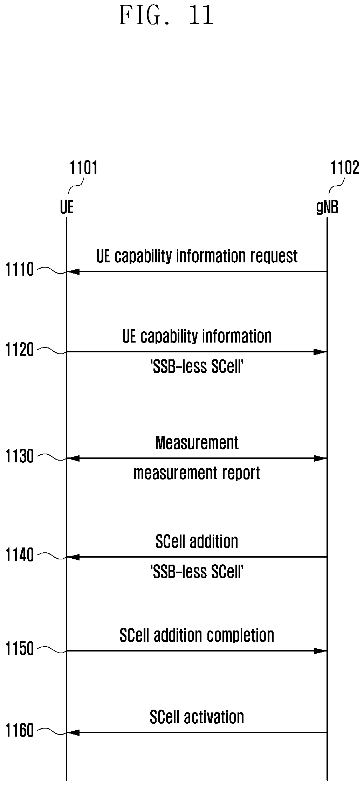

Hereinafter, operation according to the second embodiment will be described with reference to FIG. 11. FIG. 11 is a diagram illustrating an example of operation according to the second embodiment.

Referring to FIG. 11, in operation 1110, a base station 1102 may transmit a UE capability information request message to a UE 1101. In response to the UE capability information request from the base station, the UE transmits UE capability information to the base station in operation 1120. The UE capability information may include at least one of the following information: whether the UE supports carrier aggregation, bandwidth-related control information of each component carrier when carrier aggregation is supported, whether the UE supports a base station energy reduction operation, and whether the UE supports an SSB transmission reduction operation for a base station.

In operation 1130, the UE may provide a measurement report with regard to neighboring cells. For example, when a strength of a received signal (e.g., the received signal may be a reference signal) from a neighboring cell observed by the UE is greater than a predetermined threshold, the UE may include the corresponding cell ID and the strength of the received signal in a measurement report and transmit the same to the base station. A reference signal observed by the UE for measurement reporting may be an SSB or a CSI-RS transmitted by a neighboring cell. The base station may inform the UE of control information for the UE's measurement reporting via signaling. The control information for the UE's measurement reporting may include at least a portion of the following control information. The signaling may be higher signaling.

- Information associated with a reference signal of a neighboring cell to be measured. For example, whether it is an SSB or a CSI-RS.
- A subcarrier spacing of the reference signal
- A location of the reference signal in the time/frequency domain
- A size of the reference signal in the time/frequency domain
- Whether to perform reporting periodically or based on a predetermined event when reporting a measurement result measured by the UE to the base station

The base station may determine whether to configure carrier aggregation for the UE or to indicate a handover to another cell, by referring to the UE's measurement report, UE capability information, and the like. Determining whether to configure carrier aggregation may be, for example, determining whether to combine an additional carrier (SCell) with the current UE's PCell.

When the base station determines to apply the carrier aggregation operation and SSB-less SCell operation to the UE, the base station may include related information necessary for SCell combination of the UE in an "RRC reconfiguration" message and transmit the same to the UE in operation 1140. This is referred to as an "SCell addition" operation. The related information necessary for the carrier aggregation may include the SCell's carrier bandwidth and center frequency information, common control information for a physical channel of the SCell, and control information indicating that the SCell is an "SSB-less SCell" that reduces SSB transmission. The control information indicating that the SCell is an "SSB-less SCell" that reduces SSB transmission may follow the above-description.

The UE completes a process for performing communication with the SCell according to the received "RRC reconfiguration" message, and then transmits an "RRC reconfiguration complete" message to the base station so as to notify that a "SCell addition" configuration procedure is completed, in operation 1150.

In operation 1160, the base station may indicate SCell activation to the UE having completed SCell configuration through the SCell addition. When SCell activation is performed, the UE may monitor a PDCCH for scheduling downlink data and uplink data of the corresponding SCell, and perform an operation such as reception of a PDSCH scheduled by the PDCCH, transmission of a PUSCH scheduled by the PDCCH, transmission of an SRS in an uplink of the SCell, CSI reporting, and PUCCH transmission, or the like. The base station may inform the UE of an SCell activation indication (or command) via MAC signaling or physical layer signaling. The base station may inform the UE of the control information indicating that the SCell is an "SSB-less SCell" that reduces SSB transmission, by including the control information in the SCell activation command in operation 1160, instead of the RRC reconfiguration message in operation 1140. The control information included in the SCell activation command, and indicating that the SCell is an "SSB-less SCell" that reduces SSB transmission may be, for example, a bit added to an SCell activation/deactivation MAC CE, and indicating that each cell is an "SSB-less SCell", or may correspond to a separate MAC CE indicating that each cell is an "SSB-less SCell."

After operation 1160, the UE is in a state in which it is ready to perform data transmission/reception with both the PCell and SCell of the base station.

The above-described flowchart illustrates an exemplary method that may be implemented according to the principles of the disclosure, and various changes may be made to the method illustrated in the flowchart in the disclosure. For example, although the operations are illustrated as a series of operations, the various operations of each drawing may overlap, operate in parallel, operate in a different order, or operate multiple times. In another example, operations may be omitted or replaced with other operations.

The UE which is notified by the base station that the SCell is an "SSB-less SCell" may perform QCL determination according to the first embodiment described above.

In addition, for the SCell, since an SSB may insufficiently exist, an SSB-based measurement reporting may no longer be valid. Accordingly, in a similar manner to the first embodiment, the base station may notify the UE of a separate "reference cell" and/or "reference signal" for measurement reporting associated with the SCell, so as to support a measurement reporting operation of the UE. For example, the base station may indicate, to the UE, the separate reference cell (or the reference cell and a predetermined reference signal on the reference cell) for measurement reporting, or may indicate, to the UE, that measurement reporting needs to be performed based on another reference signal (e.g., CSI-RS) on the SCell.

In addition, generally, in order to determine transmission power of an uplink signal (e.g., SRS) or an uplink channel (PUCCH or PUSCH) in a predetermined cell, the UE may determine a degree of pathloss between the UE and the base station by referring to a reception strength of an SSB of the corresponding cell and apply the same to uplink transmission power control. However, in the case of the "SSB-less SCell," a corresponding SSB may not exist as described above, and thus the base station may determine a "reference cell" or/and "reference signal" which is a reference for uplink transmission power of the UE and inform the UE of the same. For example, the reference cell and/or reference signal for determining the pathloss may be the same as the reference cell and/or reference signal for QCL determination as indicated in the first embodiment, or the reference cell and/or reference signal for determining the pathloss may be indicated to the UE separately from the reference cell and/or reference signal for QCL determination. The reference signal may be, for example, an SSB or a CSI-RS.

<Third Embodiment>

The third embodiment describes a method of interpreting SSB configuration information when a base station omits SSB transmission in a predetermined cell in order to decrease base station energy consumption.

Specifically, the third embodiment describes a method of interpreting ss-PBCH-BlockPower control information when SSB transmission of an SCell is omitted in order to decrease base station energy consumption in a system applying carrier aggregation.

First, a method of configuring transmission power of a downlink signal in a base station's general mode in which a base station energy consumption reduction operation is not applied will be described.

The transmission power of a signal may be expressed in conjunction with a bandwidth, as a power spectral density (PSD). The PSD is usually expressed in units of Watt/Hz, which means power per unit bandwidth. A transmission bandwidth refers to a bandwidth occupied by a signal transmitted by the base station, and may be expressed in units of MHz. An EPRE may be used as a concept similar to the PSD. The EPRE refers to energy per RE. The EPRE may be expressed in units of dBm.

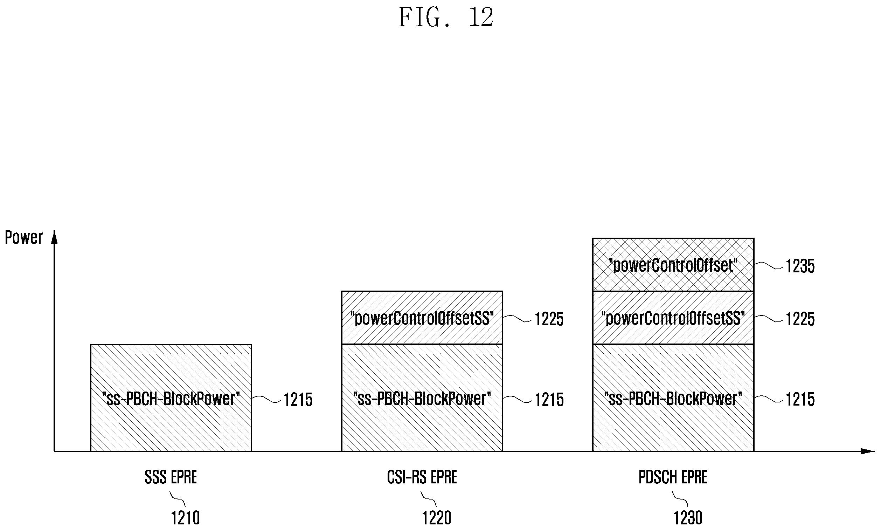

FIG. 12 is a diagram illustrating an example of an EPRE configuration of a downlink signal in a 5G system. A base station basically configures an SSS EPRE 1210, adjusts a CSI-RS EPRE 1220 relative to the SSS EPRE, and adjusts a PDSCH EPRE 1230 relative to the CSI-RS EPRE, adjusts a PDSCH DMRS EPRE relative to the PDSCH EPRE, and the like. That is, the EPRE relationship of the downlink signal is interrelated. The base station may inform the UE of the EPRE of the downlink signal through the following method. Signaling used by the base station to inform the UE of the above-described power-related information may be higher-layer signaling or DCI.

- *"ss-PBCH-BlockPower"* 1215: a parameter for adjusting the SSS EPRE 1210, which is provided to the UE by the base station through signaling. It is expressed in units of dBm. For a PSS EPRE, a PBCH EPRE, and a PBCH DMRS EPRE, the same value as the SSS EPRE is applied.
- *"powerControlOffsetSS"* 1225: a parameter for adjusting a power offset of a CSI-RS relative to an SSS RE, which is provided to the UE by the base station through signaling. This is a ratio of the CSI-RS EPRE to the SSS EPRE, and is expressed in dB. As a result, CSI-RS EPRE 1220 = *"ss-PBCH-BlockPower"* +*"powerControlOffsetSS."*
- *"powerControlOffset"* 1235: a parameter for adjusting a power offset of a PDSCH RE relative to a CSI-RS RE, which is provided to the UE by the base station through signaling. This is a ratio of the PDSCH EPRE to the CSI-RS EPRE, and is expressed in dB. As a result, PDSCH EPRE 1230 = *"ss-PBCH-BlockPower"*+*"powerControlOffsetSS"*+*"power-ControlOffset."*
- Ratio of PDSCH EPRE to PDSCH DMRS EPRE: the ratio of PDSCH EPRE to PDSCH DMRS EPRE is determined according to a PDSCH DMRS configuration separately determined by the base station.

When the base station omits SSB transmission of an SCell for energy reduction, *"ss-PBCH-BlockPower"* indicating the transmission power of an SSS of an SSB becomes a value no longer related to the SSB transmission of the SCell. However, *"ss-PBCH-BlockPower"* may still be a reference for calculating the transmission power of the SCell's CSI-RS and PDSCH.

Therefore, the UE's operation regarding the SCell's *"ss-PBCH-BlockPower"* may be classified as the following operations, depending on whether or not the SCell omits SSB transmission.

- In a case in which *"ss-PBCH-BlockPower"* of the SCell is signaled and SCell SSB transmission is not omitted: the UE recognizes that SSB transmission of the SCell is actually performed, and calculates transmission power of an SSS based on *"ss-PBCH-BlockPower."* In addition, transmission power of an SCell CSI-RS or an SCell PDSCH is calculated based on the *"ss-PBCH-BlockPower."*
- In a case in which *"ss-PBCH-BlockPower"* of the SCell is signaled and SCell SSB transmission is omitted: the UE recognizes that SSB transmission of the SCell is not actually performed, and does not calculate transmission power of an SSS. The transmission power of the SCell CSI-RS and SCell PDSCH is calculated based on *"ss-PBCH-Block-Power."*

- In a case in which *"ss-PBCH-BlockPower"* of the SCell is not signaled and SCell SSB transmission is omitted: the UE recognizes that SSB transmission of the SCell is not actually performed, and does not calculate transmission power of an SSS. The base station may inform the UE of another cell other than the SCell as a "reference cell," and the UE may calculate the CSI-RS transmission power of the SCell and the PDSCH transmission power of the SCell based on SSS transmission power of the "reference cell."

<Fourth Embodiment>

In the fourth embodiment, when SSB transmission of an SCell is reduced for the purpose of decreasing base station energy consumption in a system in which carrier aggregation is applied, a maximum receive timing difference (MRTD) between downlink signals, respectively received from cell A and cell B included in the carrier aggregation, is defined.

Table 11 shows an allowable tolerance for the MRTD in a general carrier aggregation environment. According to Table 11, the allowable tolerance for the MRTD is defined in accordance with a detailed condition of a frequency band to which the carrier aggregation is applied.

- Frequency range 1 (FR1): frequency in the range of 410 to 7125 MHz, which is a relatively low frequency band compared to FR2.
- Frequency range 2 (FR2): frequency in the range of 24.25 to 52.6 GHz, which is a relatively high frequency band compared to FR1.
- Between FR1 and FR2: a case in which frequency in FR1 and frequency in FR2 are configured as a carrier aggregation system.
- Intra-band non-contiguous CA: a carrier aggregation between cells that operate in non-contiguous frequencies in the same frequency band. Since a difference in the channel environments between cells is relatively small, as compared to inter-band CA, a relatively small value is applied as the allowable tolerance for the MRTD.
- Inter-band CA: a carrier aggregation between cells operating in different frequency bands. As compared to intra-band non-contiguous CA, a difference in the channel environments between cells is large, and thus a relatively large value is applied as the allowable tolerance for the MRTD.

[Table 11]

| Frequency Range | Intra-band non-contiguous CA | Inter-band CA |
|---|---|---|
| FR1 | 3 $\mu$s | 33 $\mu$s |
| FR2 | 0.26 $\mu$s | 8 $\mu$s |
| Between FR1 and FR2 | - | 25 $\mu$s |

As described above, when the SSB transmission of the SCell is reduced to decrease the base station energy consumption, a UE needs to refer to an indicated "reference cell", for the purpose of determining QCL associated with the SCell or performing measurement reporting associated with the SCell. The "reference cell" needs to have sufficient similarity to be used as a reference for the QCL associated with the SCell or a channel state, it is preferable to apply a relatively small value as the allowable tolerance for the MRTD. Therefore, according to the fourth embodiment, in a carrier aggregation system including an "SSB-less SCell," the allowable tolerance for the MRTD may be defined as shown in Table 12 below. According to Table 12, the allowable tolerance for the MRTD is defined according to a detailed condition of a frequency band to which carrier aggregation is applied.

- FR1: MRTD (A3) of a carrier aggregation system including an "SSB-less SCell" satisfies a relationship of $A1 \leq A3 < A2$.
- FR2: MRTD (B3) of the carrier aggregation system including an "SSB-less SCell" satisfies a relationship of $B1 \leq B3 < B2$.
- Between FR1 and FR2: MRTD (C3) of the carrier aggregation system including an "SSB-less SCell" satisfies a relationship of $C3 < C2$.

That is, in the case of the CA including an SSB-less SCell, the value of the allowed MRTD may be equal to or smaller than that in the case of inter-band CA, and larger than that in the case of intra-band CA.

[Table 12]

| Frequency Range | Intra-band non-contiguous CA | Inter-band CA | CA with SSB-less SCell |
|---|---|---|---|
| FR1 | 3 μs (A1) | 33 μs (A2) | A3 |
| FR2 | 0.26 μs (B1) | 8 μs (B2) | B3 |
| Between FR1 and FR2 | - | 25 μs (C2) | C3 |

Therefore, in the case of the carrier aggregation system including an "SSB-less SCell," the maximum reception timing difference (MRTD) between downlink signals that the UE receives respectively from different cells A and B is required to satisfy the allowable tolerance of Table 12. The base station needs not to configure CA that does not satisfy the MRTD configuration, and when a CA configuration by the base station does not satisfy the MRTD configuration, the UE may determine that the CA configuration is an incorrect base station configuration and may not follow the configuration.

<Fifth Embodiment>

In the fifth embodiment, an example of a UE procedure and a base station procedure according to a preferred embodiment of the disclosure will be described. The UE procedure and the base station procedure of the fifth embodiment may be performed in combination with at least one of the first to fourth embodiments.

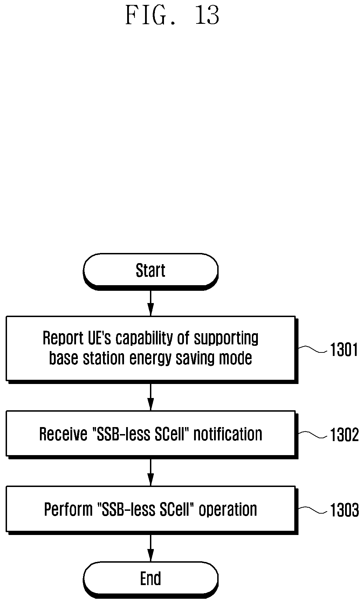

FIG. 13 is a diagram illustrating an example of a UE procedure according to an embodiment of the disclosure. Specifically, FIG. 13 is a flowchart illustrating a procedure in which, when a base station reduces SSB transmission of an SCell for energy consumption reduction in a system in which carrier aggregation is applied, a UE performs a corresponding operation according to a configuration by the base station.

Referring to FIG. 13, in operation 1301, the UE reports, to the base station, UE capability information including capability of supporting a base station energy saving mode. The UE capability information may include, specifically, at least one piece of capability information related to the base station energy saving mode, such as information indicating whether the UE supports a base station energy saving mode, information indicating whether the UE supports carrier aggregation, information indicating whether the UE supports an SSB transmission reduction operation of a base station, control information related to a frequency band supported by the UE, and control information related to a channel bandwidth supported by the UE.

In operation 1302, the UE may be notified of an "SSB-less SCell" configuration from the base station. The "SSB-less SCell" configuration may include control information indicating that the corresponding SCell is an "SSB-less SCell" in which SSB transmission is reduced, and information according to the above-described embodiments, and the detailed method follows the above-described embodiments.

In operation 1303, the UE performs an "SSB-less SCell" operation according to a base station configuration. According to the above-described embodiment, the UE may determine QCL associated with the "SSB-less SCell" by referring to a "reference signal" of a "reference cell," and/or perform at least one of measurement report generation and transmission, determination of an uplink signal or channel transmission power, and configuration of transmission power of a downlink signal, based on the reference cell and/or reference signal configured according to the above-described embodiment. In addition, the UE is required to satisfy an allowable tolerance for an MRTD described in the above-described embodiment.

The operations described with reference to FIG. 13 may be omitted or their order may be changed, or operations not described may be added and the disclosure is performed. The above-described flowchart illustrates an exemplary method that may be implemented according to the principles of the disclosure, and various changes may be made to the method illustrated in the flowchart of this specification. For example, although illustrated as a series of operations, the various operations in each of the drawings may overlap, may operate in parallel, may operate in a different order, or may operate multiple times. In another example, operations may be omitted or replaced with other operations.

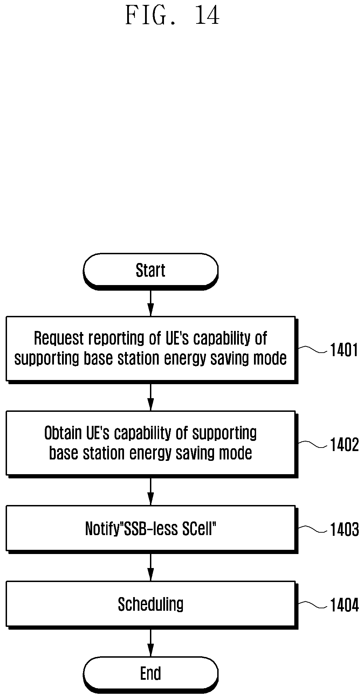

FIG. 14 is a diagram illustrating an example of a base station procedure according to an embodiment of the disclosure. Specifically, FIG. 14 is a flowchart illustrating a procedure in which, when a base station reduces SSB transmission of an SCell for energy consumption reduction in a system in which carrier aggregation is applied, the base station notifies a UE of a corresponding configuration and performs a related operation.

Referring to FIG. 14, in operation 1401, the base station may request the UE to transmit UE capability information. In operation 1402, the base station acquires UE capability information including capability of supporting a base station energy saving mode. The UE capability information may include, specifically, at least one piece of capability information related to the base station energy saving mode, such as information indicating whether the UE supports a base station energy saving mode, information indicating whether the UE supports carrier aggregation, information indicating whether the UE supports an SSB transmission reduction operation of a base station, control information related to a frequency band supported by the UE, and control information related to a channel bandwidth supported by the UE.

Thereafter, in operation 1403, the base station notifies the UE of an "SSB-less SCell" configuration. According to the above-described embodiment, the base station may notify the UE of the "SSB-less SCell" configuration through SSB configuration information or additional control information that has been described above. In addition, information associated with the "SSB-less SCell" configuration may be included in an "RRC reconfiguration" message or an SCell activation command, as described above. In addition, information according to the above-described embodiment may be further included in the "SSB-less SCell" configuration.

In operation 1404, the base station performs a scheduling operation for the UE according to the "SSB-less SCell" configuration. According to the above-described embodiment, the base station may determine QCL associated with the "SSB-less SCell" by referring to a "reference signal" of a "reference cell." Alternatively, the base station may receive a measurement report based on the configured reference cell and/or reference signal, receive an uplink signal or channel transmitted using transmission power determined based on the configured reference cell and/or reference signal, or generate a downlink transmission power parameter based on the reference cell and/or reference signal and transmit the same to the UE. According to the above-described embodiment, the base station performs scheduling so as to satisfy an allowable tolerance for an MRTD of the UE.

It is also possible to perform the disclosure after omitting steps described with reference to FIG. 14, changing the order thereof, or adding steps not described. The above-described flowchart illustrates an exemplary method that may be implemented according to the principle of the disclosure, and various changes may be made to the method shown in the flowchart herein. For example, although shown as a series of operations, various operations in each figure may overlap, occur in parallel, occur in a different order, or occur multiple times. In another example, an operation may be omitted or replaced with another operation.

Also, the methods describe din FIGS. 13 and 14 may be performed in combination with at least one of the first to fourth embodiments.

Within the cell controlled by the base station operating as described above, a UE supporting a UE operation according to the base station energy saving mode (hereinafter, referred to as UE A) and a UE not supporting the same (hereinafter, referred to as UE B) may coexist. UE A may perform UE operations according to the above-described specific embodiments. UE B cannot respond to a change in the gNB transmission scheme according to the base station energy saving mode, and thus has a concern of performance degradation in connection with the transmission efficiency, cell capacity, throughput, and UE power consumption. Therefore, if the base station can distinguish between UE A and UE B with reference to a UE capability report from the UE, an additional operation may be taken to prevent performance degradation of UE B. For example, the base station may hand over UE B to an adjacent cell having a base station in a base station normal mode state, instead of the current cell which is supposed to switch to a base station energy saving mode.

The fifth embodiment may be variously modified. For example, the step in which the UE reports UE capability to the base station may be omitted.

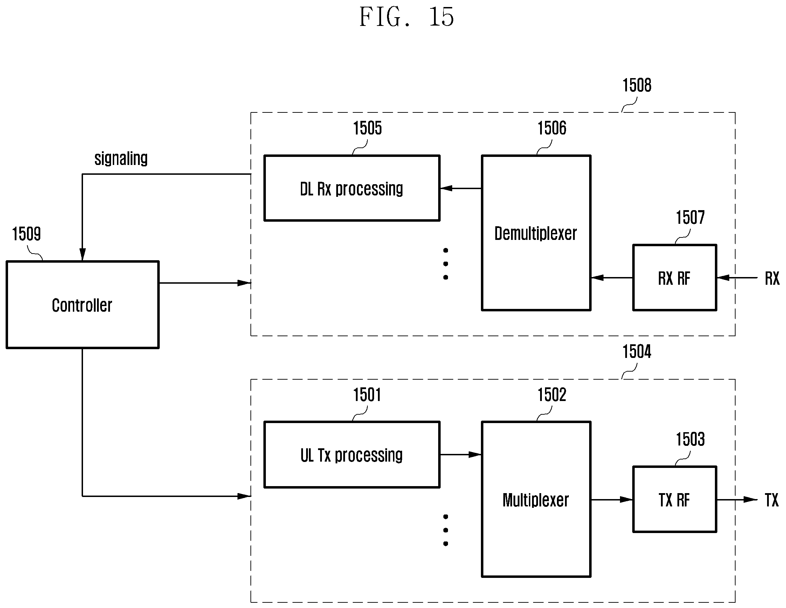

FIG. 15 illustrates an example of a UE transcribing device in a wireless communication system according to an embodiment of the disclosure. For the sake of descriptive convenience, devices having no direct relevance to the disclosure may not be illustrated and described.

Referring to FIG. 15, the UE may include a transmitter 1504 including an uplink transmission processing block 1501, a multiplexer 1502, and a transmission RF block 1503, a receiver 1508 including a downlink reception processing block 1505, a demultiplexer 1506, and a reception RF block 1507, and a controller 1509. The controller 1509 may control respective constituent blocks of the receiver 1508 for receiving data channels or control channels transmitted by the base station, as described above, and respective constituent blocks of the transmitter 1504 for transmitting uplink signals.

The uplink transmission processing block 1501 in the transmitter 1504 of the UE may generate signals to be transmitted, by performing processes such as channel coding and modulation. A signal generated by the uplink transmission processing block 1501 may be multiplexed with another uplink signal by the multiplexer 1502, signal-processed by the transmission RF block 1503, and then transmitted to the base station.

The receiver 1508 of the UE demultiplexes signals received from the base station and distributes the same to each downlink reception processing block. The downlink reception processing block 1505 may acquire control information or data transmitted by the base station by performing processes such as demodulation and channel decoding with regard to downlink signals from the base station. The receiver 1508 of the UE may apply the result of output from the downlink reception processing block to the controller 1509, thereby supporting the operation of the controller 1509.

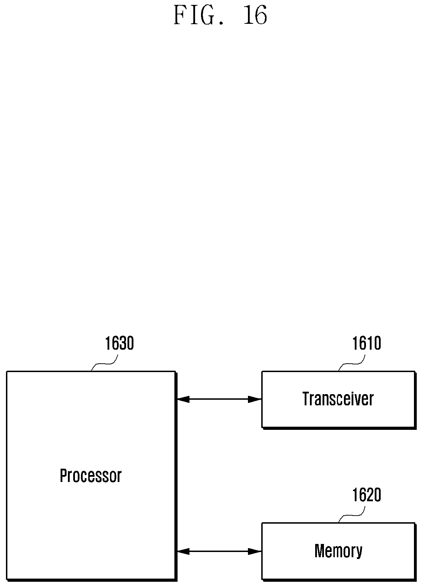

FIG. 16 illustrates an example of a structure of a UE according to an embodiment of the disclosure.

Referring to FIG. 16, a UE of the disclosure may include a processor 1630, a transceiver 1610, and a memory 1620. However, components of the UE are not limited to the above-described example. For example, the UE may include a larger or smaller number of components than the above-described components. In addition, the processor 1630, the transceiver 1610, and the memory 1620 may be implemented in the form of a single chip. According to an embodiment, the transceiver 1610 of FIG. 16 may include the transmitter 1504 and the receiver 1508 of FIG. 15. Also, the processor 1630 of FIG. 16 may include the controller 1509 of FIG. 15.

According to an embodiment, the processor 1630 may control a series of processes so that the UE can operate according to the above-described embodiments of the disclosure. For example, according to embodiments of the disclosure, the processor 1630 may control the components of the UE to perform the transmission and reception method of the UE according to "SSB-less SCell" configurations of base stations. The processor 1630 may include one or multiple processors, and the processor 1630 may execute programs stored in the memory 1620 to perform the transmission and reception operation of the UE in a wireless communication system employing the above-described operation of the disclosure.

The transceiver 1610 may transmit/receive signals with the base stations. The signals transmitted/received with base stations may include control information and data. The transceiver 1610 may include an RF transmitter configured to up-convert and amplify the frequency of transmitted signals, an RF receiver configured to low-noise-amplify received signals and down-convert the frequency thereof, and the like. However, this is only an embodiment of the transceiver 1610, and the components of the transceiver 1610 are not limited to the RF transmitter and the RF receiver. In addition, the transceiver 1610 may receive signals through a radio channel, output the same to the processor 1630, and transmit signals output from the processor 1630 through the radio channel.

According to an embodiment, the memory 1620 may store programs and data necessary for the operation of the UE. In addition, the memory 1620 may store control information or data included in signals transmitted/received by the UE. The memory 1620 may include storage media such as a ROM, a RAM, a hard disk, a CD-ROM, and a DVD, or a combination of storage media. The memory 1620 may include one or more memories, and according to an embodiment, the memory 1620 may store programs for performing the transmission/reception operation of the UE according to "SSB-less SCell" configurations corresponding to above-described embodiments of the disclosure.

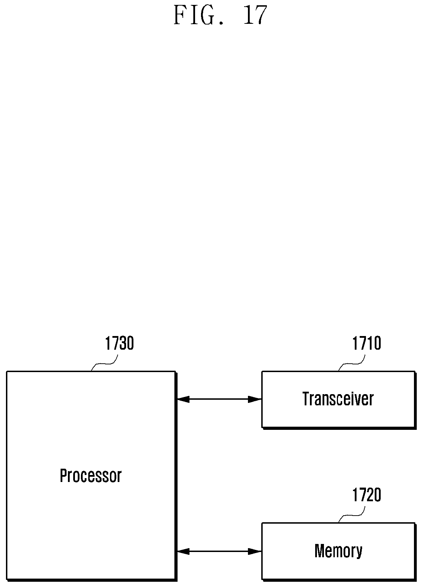

FIG. 17 illustrates an example of a structure of a base station according to an embodiment of the disclosure.

Referring to FIG. 17, the base station of the disclosure may include a processor 1730, a transceiver 1710, and a memory 1720. However, components of the base station are not limited to the above-described example. For example, the base station may include a larger or smaller number of components than the above-described components. In addition, the processor 1730, the transceiver 1710, and the memory 1720 may be implemented in the form of a single chip.

The processor 1730 may control a series of processes so that the base station can operate according to the above-described embodiments of the disclosure. For example, according to embodiments of the disclosure, the processor 1730 may control the components of the base station to perform the method for scheduling UEs according to "SSB-less SCell" configurations. The processor 1730 may include one or multiple processors, and the processor 1730 may execute programs stored in the memory 1720 to perform the method corresponding to the above-described "SSB-less SCell" configurations for the UE of the disclosure.

The transceiver 1710 may transmit/receive signals with UEs. The signals transmitted/received with UEs may include control information and data. The transceiver 1710 may include an RF transmitter configured to up-convert and amplify the frequency of transmitted signals, an RF receiver configured to low-noise-amplify received signals and down-convert the frequency thereof, and the like. However, this is only an embodiment of the transceiver 1710, and the components of the transceiver 1710 are not limited to the RF transmitter and the RF receiver. In addition, the transceiver 1710 may receive signals through a radio channel, output the same to the processor 1730, and transmit signals output from the processor 1730 through the radio channel.

According to an embodiment, the memory 1720 may store programs and data necessary for the operation of the base station. In addition, the memory 1720 may store control information or data included in signals transmitted/received by the base station. The memory 1720 may include storage media such as a ROM, a RAM, a hard disk, a CD-ROM, and a DVD, or a combination of storage media. In addition, the memory 1720 may include multiple memories. According to an embodiment, the memory 1720 may store programs for performing the method for scheduling UEs according to "SSB-less SCell" configurations corresponding to the embodiments of the disclosure.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic

# EP 4 783 681 A1

device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural, and therefore, either an element expressed in the plural may also include a single element or an element expressed in the singular may also include multiple elements

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. Although particular terms are used, they have been used in a general sense merely to easily explain the technical contents of the disclosure and help understanding of the disclosure, and are not intended to limit the scope of the disclosure. Also, it will be apparent to those skilled in the art that other variants based on the technical idea of the disclosure may be implemented. In addition, the above respective embodiments may be employed in combination, as necessary. As an example, a part of one embodiment of the disclosure may be combined with a part of another embodiment to operate a base station and a terminal. In addition, the embodiments of the disclosure may be applied to other communication systems and other variants based on the technical idea of the embodiments may also be implemented.

## Claims

1. A method performed by a terminal in a communication system, the method comprising:

   receiving, from a base station, information on a reference cell;
   identifying that a first secondary cell (SCell) is an SSB-less SCell; and
   based on the information on the reference cell, identifying a second reference signal (RS) that is in a quasi-co-location (QCL) relationship with a first RS of the first SCell,
   wherein the second RS is an RS of a cell indicated by the information on the reference cell.

2. The method of claim 1, wherein the second RS is a synchronization signal block (SSB).

3. The method of claim 1, further comprising:
   transmitting, to the base station, terminal capability information supporting an SSB-less SCell.

4. The method of claim 1, wherein a maximum receive timing difference (MRTD) required for carrier aggregation (CA) including the SSB-less SCell is greater than or equal to an MRTD required for intra-band CA and less than an MRTD required for inter-band CA.

5. A method performed by a base station in a communication system, the method comprising:

   identifying that a first secondary cell (SCell) is an SSB-less SCell; and
   transmitting, to a terminal, information on a reference cell,
   wherein a first reference signal (RS) of the first SCell is in a quasi-co-location (QCL) relationship with a second RS,
   and the second RS is an RS of a cell indicated by the information on the reference cell.

6. The method of claim 5, wherein the second RS is a synchronization signal block (SSB).

7. The method of claim 5, further comprising:
   receiving, from the terminal, terminal capability information supporting an SSB-less SCell.

8. The method of claim 5, wherein a maximum receive timing difference (MRTD) required for carrier aggregation (CA) including the SSB-less SCell is greater than or equal to an MRTD required for intra-band CA and less than an MRTD required for inter-band CA.

9. A terminal in a communication system, the terminal comprising:

   a transceiver; and

a controller configured to
receive, from a base station, information on a reference cell,
identify that a first secondary cell (SCell) is an SSB-less SCell, and
based on the information on the reference cell, identify a second reference signal (RS) that is in a quasi-co-location (QCL) relationship with a first RS of the first SCell,
wherein the second RS is an RS of a cell indicated by the information on the reference cell.

10. The terminal of claim 9, wherein the second RS is a synchronization signal block (SSB).

11. The terminal of claim 9, wherein the controller is further configured to transmit, to the base station, terminal capability information supporting an SSB-less SCell.

12. The terminal of claim 9, wherein a maximum receive timing difference (MRTD) required for carrier aggregation (CA) including the SSB-less SCell is greater than or equal to an MRTD required for intra-band CA and less than an MRTD required for inter-band CA.

13. A base station in a communication system, the base station comprising:

a transceiver; and
a controller configured to
identify that a first secondary cell (SCell) is an SSB-less SCell, and
transmit, to a terminal, information on a reference cell,
wherein a first reference signal (RS) of the first SCell is in a quasi-co-location (QCL) relationship with a second RS, and the second RS is an RS of a cell indicated by the information on the reference cell.

14. The base station of claim 13, wherein the controller is further configured to receive, from the terminal, terminal capability information supporting an SSB-less SCell.

15. The base station of claim 13, wherein a maximum receive timing difference (MRTD) required for carrier aggregation (CA) including the SSB-less SCell is greater than or equal to an MRTD required for intra-band CA and less than an MRTD required for inter-band CA.

# FIG. 1

Frame [114]

subframe [105]

· · ·      · · ·

Slot
[106]

Transmission
bandwidth
$N_{BW}$ subcarriers
[104]

$N^{RB}_{sc}$
subcarriers
[110]

Resource element
[112]

$N^{slot}_{symb}$ symbols
[102]

Frequency

Time

# FIG. 2

# FIG. 3

UE        gNB

① ——— Random Access Preamble ———▶
Message 1
[310]

◀——— Random Access Response ——— ②
Message 2
[320]

③ ——— Scheduled Transmission ———▶
Message 3
[330]

◀——— Contention Resolution ——— ④
Message 4
[340]

# FIG. 4

FIG. 5

TCI state #0
(500)

TCI state #1
(505)

TCI state #2
(510)

# FIG. 6

RRC configured TCI states (600)

| TCI #0 (605) | TCI #1 (610) | TCI #2 (615) | . . . | TCI #N (620) |

A list of TCI states for a CORESET (625)

| TCI #a (630) | TCI #b (635) | . . . | TCI #n (640) |

TCI indication via MAC CE (645)

FIG. 7

| R | Serving Cell ID | BWP ID | Oct 1 (700) |
|---|---|---|---|
| CORESET ID | TCI state ID | | Oct 2 (705) |

EP 4 783 681 A1

# FIG. 8

FIG. 9

FIG. 10

1010

No ⟵ SSB-less SCell? ⟶ Yes

1020

"PDCCH QCL determination method 2"
or
"PDCCH QCL determination method 3"

1030

RS of "reference cell"

# FIG. 11

FIG. 12

EP 4 783 681 A1

# FIG. 13

```
                    ┌─────────────┐
                    │    Start    │
                    └──────┬──────┘
                           │
                           ▼
        ┌──────────────────────────────────┐
        │  Report UE's capability of supporting │      1301
        │  base station energy saving mode  │
        └──────────────────┬───────────────┘
                           │
                           ▼
        ┌──────────────────────────────────┐
        │  Receive "SSB-less SCell" notification │    1302
        └──────────────────┬───────────────┘
                           │
                           ▼
        ┌──────────────────────────────────┐
        │  Perform "SSB-less SCell" operation │      1303
        └──────────────────┬───────────────┘
                           │
                           ▼
                    ┌─────────────┐
                    │     End     │
                    └─────────────┘
```

# FIG. 14

```
              ┌──────────────┐
              │    Start      │
              └──────────────┘
                     │
                     ▼
   ┌─────────────────────────────────────┐
   │ Request reporting of UE's capability of │ ～1401
   │ supporting base station energy saving mode │
   └─────────────────────────────────────┘
                     │
                     ▼
   ┌─────────────────────────────────────┐
   │   Obtain UE's capability of supporting │ ～1402
   │     base station energy saving mode    │
   └─────────────────────────────────────┘
                     │
                     ▼
   ┌─────────────────────────────────────┐
   │          Notify"SSB-less SCell"        │ ～1403
   └─────────────────────────────────────┘
                     │
                     ▼
   ┌─────────────────────────────────────┐
   │              Scheduling                │ ～1404
   └─────────────────────────────────────┘
                     │
                     ▼
              ┌──────────────┐
              │     End       │
              └──────────────┘
```

FIG. 15

EP 4 783 681 A1

FIG. 16

FIG. 17

## INTERNATIONAL SEARCH REPORT

| | International application No. |
|---|---|
| | **PCT/KR2024/096250** |

| A. | CLASSIFICATION OF SUBJECT MATTER |
|---|---|

**H04W 52/02**(2009.01)i; **H04B 7/06**(2006.01)i; **H04B 7/08**(2006.01)i; **H04L 5/00**(2006.01)i; **H04W 8/24**(2009.01)i; **H04W 56/00**(2009.01)i

According to International Patent Classification (IPC) or to both national classification and IPC

| B. | FIELDS SEARCHED |
|---|---|

Minimum documentation searched (classification system followed by classification symbols)

H04W 52/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 기준 셀(reference cell), SSB-less SCell, 기준 신호(reference signal), QCL

| C. | DOCUMENTS CONSIDERED TO BE RELEVANT |
|---|---|

| Category* | Citation of document, with indication, where appropriate, of the relevant passages | Relevant to claim No. |
|---|---|---|
| X<br>Y | APPLE. On SSB-less SCell operation for NES. R4-2316589, 3GPP TSG-RAN WG4 Meeting # 108bis. Xiamen, China. 27 September 2023.<br>See pages 2-7. | 1-3,5-7,9-11,13-14<br>4,8,12,15 |
| Y | INTEL CORPORATION. NR network energy saving RRM aspects – SSB-less SCell. R4-2312338, 3GPP TSG-RAN WG4 Meeting #108. Toulouse, France. 11 August 2023.<br>See page 3. | 4,8,12,15 |
| A | NOKIA et al. SSB-less operation for FR1 inter-band co-located CA. R4-2315520, 3GPP TSG-RAN WG4 Meeting #108bis. Xiamen, China. 27 September 2023.<br>See pages 1-7. | 1-15 |
| A | QUALCOMM INCORPORATED. Discussion on RRM requirements of SSBless Scell for inter-band CA. R4-2311165, 3GPP TSG-RAN4 Meeting #108. Toulouse, France. 11 August 2023.<br>See pages 1-4. | 1-15 |
| A | ZTE CORPORATION. Discussion on RRM aspects of Network energy saving for NR. R4-2305002, 3GPP TSG-RAN WG4 Meeting #106bis. 10 April 2023.<br>See pages 1-8. | 1-15 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 January 2025** | **03 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)